# EUROPÄISCHE PATENTSCHRIFT

(11) **EP 4 431 229 B1**
(45) Veröffentlichungstag und Bekanntmachung des Hinweises auf die Patenterteilung: **30.04.2025**
(21) Anmeldenummer: 23162015.4
(22) Anmeldetag: 15.03.2023
(51) Int. Cl.: B23Q 16/10, F16D 65/18

(54) **PNEUMATISCHE KLEMM- UND/ODER BREMSVORRICHTUNG**
PNEUMATIC CLAMPING AND/OR BRAKING DEVICE
DISPOSITIF PNEUMATIQUE DE SERRAGE ET/OU DE FREINAGE

(43) Veröffentlichungstag der Anmeldung: 18.09.2024
(73) Patentinhaber: HEMA Maschinen- und Apparateschutz GmbH, 63500 Seligenstadt (DE)
(72) Erfinder: Likus, Edmund, 63500 Seligenstadt (DE)
(74) Vertreter: Herrmann, Daniel

(56) Entgegenhaltungen:
- EP-A1- 1 629 939
- EP-B1- 1 585 616
- EP-B1- 1 651 881
- CN-A- 107 127 360

## Beschreibung

### TECHNISCHES GEBIET

Die Erfindung betrifft eine pneumatische Klemm- und/oder Bremsvorrichtung.

### HINTERGRUND DER ERFINDUNG

Bei der Herstellung von Werkzeug- oder Maschinenteilen werden Bearbeitungsmaschinen, insbesondere Arbeitsspindeln oder andere Werkzeugmaschinen, verwendet, die mittels an einer Welle befestigten Werkzeugen Material von einem Werkstück bearbeiten, insbesondere um es in die gewünschte Form zu bringen. Die Welle kann eine Rotationsachse oder Schwenkachse von einer solchen Maschine sein. Weiterhin werden mittels einer Welle rotier- oder schwenkbare Tische dazu verwendet, Werkzeuge oder Werkstücke in die geeignete Bearbeitungsposition zu stellen oder Werkstücke mit entsprechenden Drehzahlen zu bewegen. Voraussetzung für ein genaues und effizientes Bearbeiten ist dabei unter Anderem eine hohe Drehzahl der Welle. Notfall- bzw. Sicherheitssysteme haben daher die Aufgabe, die Welle bei Störung oder Ausfall der Systeme, wie beispielsweise Stromausfall oder Kabelbruch, zu stoppen bzw. in einer festen Position zu halten und damit zu fixieren.

Gängige Bearbeitungsmaschinen verfügen dabei über elektromagnetische, hydraulische oder pneumatische Klemm- und/oder Bremsvorrichtungen. Solche Vorrichtungen verfügen über einen Reibbelag, der mittels Kraftübertragung reibschlüssig mit der Welle verbunden werden kann. Dadurch wird ein unterschiedlich schnelles Fixieren der Welle ermöglicht.

Bei hydraulischen Klemmvorrichtungen wird eine Kammer mit Hydrauliköl beaufschlagt und klemmt die sich drehende Welle oder Scheibe fest. Auch passive Hydraulik-Klemmen sind bekannt. Solche hydraulischen Klemmen weisen jedoch lange Reaktionszeiten auf bzw. kurze Reaktionszeiten erfordern dort einen sehr hohen Aufwand. Ferner ist das Hydraulikmaterial, insbesondere Hydraulikventile und Hydraulikrohre, kostspielig und erfordert längere Montagezeiten. Auch ist durch das Hydrauliköl ein Mehraufwand für die Aufrechterhaltung der Sauberkeit im Umfeld einer hydraulischen Klemme zu verzeichnen.

Bei pneumatischen Klemm- und/oder Bremsvorrichtungen werden üblicherweise elastische Komponenten, insbesondere federnde Platten, mit Druckluft beaufschlagt und können einige der genannten Nachteile von hydraulischen Klemmvorrichtungen überwinden.

EP 1 585 616 B1 und EP 1 651 881 B1 beschreiben pneumatische Klemmvorrichtungen mit zwei ringförmigen Federplatten, die in ein Gehäuse der Klemmvorrichtungen eingebracht werden und dort einen Druckraum bilden, der mit Druckluft beaufschlagt oder be- und entlüftet werden kann, um die Biegung der Federplatten zu ändern und dadurch zwischen einem geschlossenen Zustand der Klemmvorrichtungen, in dem ein zu klemmendes Objekt wie eine rotierbare Welle geklemmt wird, und einem offenen Zustand der Klemmvorrichtungen, in dem das Objekt frei ist, zu wechseln. Die EP1585616 B1 zeigt dabei eine Klemmvorrichtung gemäß dem Oberbegriff des Anspruchs 1.

In der Praxis hat sich jedoch gezeigt, dass an dem Kontakt zwischen der pneumatischen Klemmvorrichtung und dem Objekt Verschleiß auftritt, der für eine Steigerung der Lebensdauer der Vorrichtung und zur Vermeidung von Beschädigungen an dem Objekt reduziert werden sollte.

### KURZBESCHREIBUNG DER ERFINDUNG

Ausgehend von dem eingangs genannten Stand der Technik liegt der Erfindung die Aufgabe zugrunde, eine pneumatische Klemm- und/oder Bremsvorrichtung bereitzustellen, bei der Verschleiß an dem Kontakt zwischen der Vorrichtung und dem zu klemmenden und/oder zu bremsenden Objekt verringert wird.

Die Erfindung löst diese Aufgabe mit einer Klemm- und/oder Bremsvorrichtung mit den Merkmalen des Patentanspruchs 1. Bevorzugte Ausführungsformen sind in den abhängigen Ansprüchen, in der Beschreibung und in den Figuren beschrieben.

Entsprechend der erfindungsgemäßen Lösung wird eine Klemm- und/oder Bremsvorrichtung zum Klemmen und/oder Bremsen eines zu klemmenden und/oder bremsenden Objekts vorgeschlagen, die Vorrichtung umfassend: ein Gehäuse umfassend ein erstes Gehäuseteil und ein zweites Gehäuseteil, wobei jedes der Gehäuseteile eine ringförmige Aussparung umfasst, die eine erste Anlagefläche des Gehäuseteils und eine zweite Anlagefläche des Gehäuseteils definiert, und wobei die beiden Gehäuseteile derart zueinander angeordnet und miteinander befestigt sind, dass die Aussparungen der ersten und zweiten Gehäuseteile zusammen einen Innenraum innerhalb des Gehäuses bilden; eine in dem Innenraum angeordnete Feder umfassend eine erste ringförmige Federplatte und eine zweite ringförmige Federplatte, wobei die erste ringförmige Federplatte in der ringförmigen Aussparung des ersten Gehäuseteils zwischen der ersten Anlagefläche und der zweiten Anlagefläche des ersten Gehäuseteils eingeklemmt ist, und wobei die zweite ringförmige Federplatte in der ringförmigen Aussparung des zweiten Gehäuseteils zwischen der ersten Anlagefläche und der zweiten Anlagefläche des zweiten Gehäuseteils eingeklemmt ist; mindestens ein Klemmelement , wobei jedes Klemmelement eine Klemmfläche aufweist, die ausgelegt ist, wenn sich ein erstes Ende einer der Federplatten an der ersten Anlagefläche eines der Gehäuseteile abstützt und ein zweites Ende der einen der Federplatten auf die zweite Anlagefläche des einen der Gehäuseteile drückt, eine Klemm- und/oder Bremskraft auf das zu klemmende und/oder zu bremsende Objekt zu übertragen; wobei die Federplatten derart innerhalb des Innenraums angeordnet sind, dass in dem Innenraum mindestens ein Druckraum gebildet wird, der zumindest teilweise durch die Federplatten begrenzt wird, wobei der Druckraum be- oder entlüftbar ist und mit Überdruck eines dem Gehäuse zuführbaren Druckmediums beaufschlagbar ist, wobei die Federplatten derart relativ zu den mindestens einen Druckraum angeordnet sind, dass durch Be- oder Entlüften des Druckraums oder Beaufschlagung des Druckraum mit Überdruck, eine Biegung mindestens einer der Federplatten veränderbar ist und dadurch die Klemm- und/oder Bremsvorrichtung zwischen einem geöffneten Zustand, in dem die Klemmfläche (7) von dem Objekt beabstandet ist, und einem geschlossenen Zustand, in dem ein oder mehrere der mindestens einen Klemmfläche eine Klemm- und/oder Bremskraft auf das Objekt übertragen, wechselt; wobei die Klemm- und/oder Bremsvorrichtung ferner mindestens eine Einlegeplatte umfasst, die zwischen der ersten Federplatte und der zweiten Federplatte in dem Innenraum angeordnet ist.

Der vorliegenden Erfindung liegt die Erkenntnis der Erfinder zugrunde, dass durch Einbringen mindestens einer Einlegeplatte zwischen den beiden Federplatten, die Klemm- und/oder Bremsvorrichtung in axialer Richtung dicker bzw. breiter ausgestaltet werden kann, ohne die Dynamik der Federplatten zu verändern. Die Einlegeplatte verdrängt Volumen zwischen den Federplatten und erlaubt damit die Vorrichtung axial dicker bzw. breiter auszugestalten, ohne dass sich das für das Druckmedium verfügbare Volumen zwischen den Federplatten vergrößert und damit die Öffnungs -und Schließgeschwindigkeit, und damit die Dynamik, der Federplatten (nachteilig) verändert. Durch eine axial dickere bzw. breitere Klemm- und/oder Bremsvorrichtung wird die Kontaktfläche (Klemmfläche) zwischen der Vorrichtung und dem Objekt im geschlossenen Zustand der Vorrichtung vergrößert, was den Verschleiß an dem Kontakt zwischen Objekt und Vorrichtung reduziert. Zudem wird durch die größere Kontaktfläche (Klemmfläche) ein wirksameres Klemmen und/oder Bremsen des Objekts erreicht. Insgesamt kann somit ein nachhaltigeres und sogar wirksameres Klemmen und/oder Bremsen des Objekts erreicht werden. Ferner bewirkt die Einlegeplatte, dass ohne erheblichen Mehraufwand bei der Herstellung der Vorrichtung unter Verwendung von vorhandenen Materialien und Prozessen eine axial dickere bzw. breitere Vorrichtung hergestellt werden kann.

Nach einem bevorzugten Aspekt der Erfindung erstreckt sich die (vorzugsweise einzige und/oder einstückige) Einlegeplatte in jedem der Gehäuseteile zwischen der jeweiligen ersten Anlagefläche und der jeweiligen zweiten Anlagefläche, was zu einer Verteilung der beschriebene Wirkungen der Einlegeplatte in beiden Gehäuseteilen führt. Insbesondere findet die Volumenverdrängung der Einlegeplatte (z.B. gleichmäßig) in beiden Gehäuseteilen statt, um so die Dynamik jeder der Federplatten möglichst unverändert zu lassen. Bevorzugt ist die Einlegeplatte mit ihrer Dicke jeweils in etwa zur Hälfte in jedem der Gehäuseteile angeordnet, was vorteilhaft für eine symmetrische Ausgestaltung und Dynamik der Vorrichtung ist. Die Einlegeplatte kann besonders bevorzugt eine Dicke von mindestens 1 mm, von mindestens 2 mm, von mindestens 3 mm, oder von mindestens 4 mm aufweisen, was eine Vergrößerung der Dicke der Vorrichtung um den gleichen Betrag bewirkt, ohne die Dynamik der Federplatten zu beeinträchtigen bzw. zu verändern und führt ebenso zu einer entsprechenden Verlängerung der Kontaktfläche (Klemmfläche) zwischen der Vorrichtung und dem Objekt in axialer Richtung, was vorteilhaft für übliche Anwendung solcher Klemm- und/oder Bremsvorrichtungen ist.

Nach einem bevorzugten Aspekt der Erfindung umfasst der mindestens eine Druckraum ein oder mehrere zweite Druckräume, wobei die ein oder mehreren zweiten Druckräume innerhalb der Feder zwischen jeder der beiden Federplatten und der Einlegeplatte angeordnet sind. Beispielsweise kann zwischen der Einlegeplatte und jeder der beiden Federplatten jeweils ein separater zweiter Druckraum gebildet werden, der separat von Außen mit einem Druckmedium beaufschlagbar ist, oder die Bereiche des Innenraums zwischen der Einlegeplatte und jeder der beiden Federplatten bilden zusammen einen zweiten Druckraum, der von Außen mit einem Druckmedium beaufschlagbar ist. Die Klemm- und/oder Bremsvorrichtung kann derart ausgelegt sein, dass durch das Belüften der ein oder mehrere zweite Druckräume oder durch das Beaufschlagen der ein oder mehreren zweiten Druckräume mit Überdruck, sich die erste Anlagefläche und die zweite Anlagefläche zumindest einer der beiden Gehäuseteile aufeinander zu bewegen und/oder sich die Biegung mindestens einer der Federplatten vergrößert, und dadurch die Vorrichtung von dem geschlossenen Zustand in den geöffneten Zustand wechselt, ohne, dass die Dynamik der Federplatten durch die Einlegeplatte wesentlich verändert würde. Die Erfinder haben erkannt: Würde keine Einlegeplatte eingebracht, würde ein größeres Volumen im zweiten Druckraum durch eine größere axiale Dicke bzw. Breite der Vorrichtung die Dynamik der Federplatten verändern. Würde statt der Einlegeplatte eine Gummierung der Federplatten oder die Federplatten selber dicker ausgestaltet, würde dies die Dynamik der Federplatten ebenfalls verändern, was nachteilig wäre.

Nach einem bevorzugten Aspekt der Erfindung ist die Einlegeplatte steif und/oder schwimmend angeordnet. Dies sorgt für einen definierten Widerstand für die Federplatten, die für die Abdichtung bevorzugt gummiert sind, sowohl am Innen-und Außendurchmesser, als auch an den Anschlüssen für die Be-/Entlüftung und Beaufschlagung mit Druckluft, sodass eine verbesserte Dichtwirkung im Bereich der Federbleche, insbesondere im (zweiten) Druckraum zwischen den Federplatten erzielt werden kann.

Nach einem bevorzugten Aspekt der Erfindung weist das Klemmelement an einer ersten Seitenfläche die Klemmfläche auf und weist an einer zweiten Seitenfläche, die vorzugsweise der ersten Seitenfläche abgewandt und/oder gegenüberliegend ist, die zweite Anlagefläche eines der Gehäuseteile auf. Dadurch wird die durch die Federplatten auf das Klemmelement bewirkte Federkraft besonders effektiv über die Klemmfläche auf das Objekt geleitet.

Nach einem bevorzugten Aspekt der Erfindung ist das Klemmelement derart elastisch, dass das Klemmelement einen Hebelarm bildet, der ausgelegt ist, sich durch das Drücken mindestens einer der Federplatten auf die zweite Anlagefläche mindestens einer der Gehäuseteile elastisch zu verformen und dadurch um einen Drehpunkt derart zu drehen, dass die Klemmfläche des Klemmelements die Klemm- und/oder Bremskraft auf das zu klemmende und/oder zu bremsende Objekt überträgt. Dadurch, dass das Klemmelement einen elastisch verformbaren Hebelarm bildet, der mittels Drehung die Klemmfläche gegen das Objekt drückt um so die Klemm- und/oder Bremskraft auf das Objekt zu übertragen, wird durch die Einlegeplatte auch zusätzlich ein längerer Hebelarm bei dem Klemmelement ermöglicht (ohne die Federplattendynamik zu verändern), was mehrere vorteilhafte Auswirkung auf die Vorrichtung hat.

Durch einen längeren Hebelarm vergrößert sich das auf das Objekt wirkende Haltemoment bei gleicher (axialer) Verbiegung der Federplatten. Einerseits bewirkt der längere Hebelarm als solches ein größeres Haltemoment. Andererseits wird das Haltemoment auch dadurch vergrößert, dass ein längerer Hebelarm des Klemmelements beim Schließvorgang früher auf das Objekt auftrifft und in diesem Zustand des früheren Auftreffens auf das Objekt die Federplatten noch stärker verbogen sind bzw. weniger entspannt sind. Dadurch liegt eine größere verbleibende Federkraft (die Federkraft ist bedingt durch die Rückstellkraft der Federplatte) vor, die auf die zweite Anlagefläche(n) wirkt und die somit eine größere Klemm- und/oder Bremskraft bewirkt, als wenn der Hebelarm bei dem Schließen später auf das Objekt treffen würde. Es wird somit das Haltemoment durch den längeren Hebelarm und durch die größere Klemm- und/oder Bremskraft vergrößert. Der längere Hebelarm führt aufgrund seiner Elastizität auch dazu, dass eine größere und/oder wirksamere Kontaktfläche (Klemmfläche im Bereich des Endes des Hebelarms) zwischen Klemmelement und dem Objekt herbeigeführt wird, was auch den Verschleiß an Objekt und Vorrichtung zusätzlich reduziert. Dieser verschleißreduzierende Effekt durch eine größere und/oder wirksamere Kontaktfläche (Klemmfläche) ist zusätzlich zu dem verschleißreduzierenden Effekt, der durch die aufgrund der axial dickeren bzw. breiteren Vorrichtung ermöglichten größeren Kontaktfläche bewirkt wird. Eine größere Kontaktfläche erlaubt ein kleinere Druckspannung (Kraft pro Fläche) bei gleichem Haltemoment. Der längere Hebelarm führt somit insgesamt zu einem starken aber gleichzeitig nachhaltigem Klemmen und/oder Bremsen des Objekts durch stärkeres Haltemoment kombiniert mit geringerem Verschleiß.

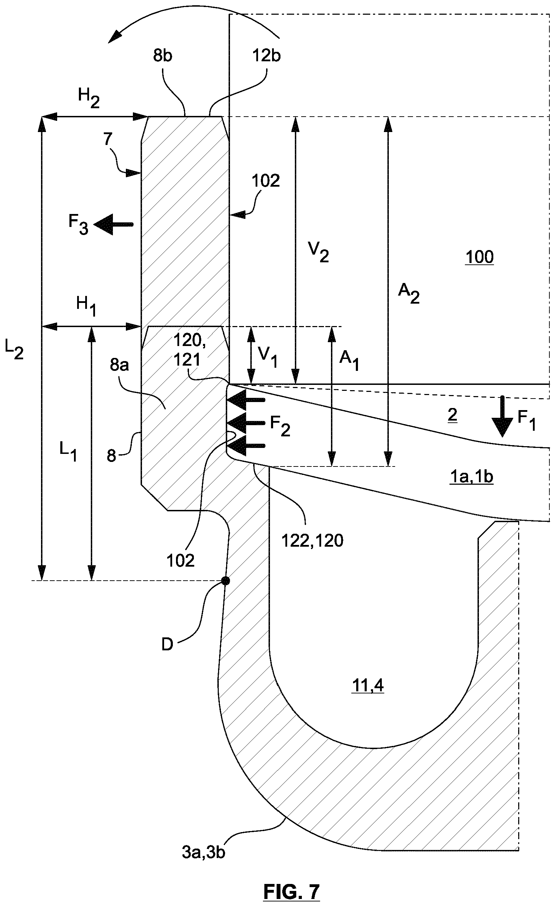

Nach einem bevorzugten Aspekt der Erfindung ist der Hebelarm derart ausgelegt, dass bei der Drehung des Hebelarms um den Drehpunkt ein Ende des Hebelarms um einen radialen Hub näher an das Objekt bewegt wird. Durch die Ermöglichung eines längeren Hebelarms wird auch - bei gleicher (axialer) Verbiegung der Federplatten - die Möglichkeit eines größeren radialen Hubes geschaffen, der mit der Länge des Hebelarms im Wesentlichen proportional ansteigt. Die Ermöglichung eines größeren radialen Hubes erlaubt, dass ein unerwünschter Reibkontakt, und damit zusätzlicher Verschleiß, vermieden werden kann. Solche unerwünschten Reibkontakte können einerseits auftreten, weil das Objekt, beispielsweise eine Welle, größer dimensioniert wurde als erwartet und beispielsweise Gefahr läuft auch im geöffneten Zustand der Vorrichtung an der Klemmfläche zu schleifen, oder dadurch, dass während des Betriebes thermische Veränderungen auf Seiten des Objekts und/oder der Klemmvorrichtung entstehen, die dazu führen, dass die Klemmfläche an dem Objekt schleift. Dadurch können Beschädigungen bzw. Abnutzungen an dem Objekt und/oder der Klemmfläche auftreten. Der größere radiale Hub ermöglicht also einerseits eine größere Vielzahl unterschiedlich dimensionierte Objekte, beispielsweise verschieden dicke Wellen, durch die Vorrichtung zu klemmen und/oder zu bremsen. Andererseits wird dadurch ferner ermöglicht, dass thermisch bedingter Verschleiß vermieden werden kann. Bevorzugt ist die Länge des Hebelarms von dem Drehpunkt zu dem Ende des Hebelarms derart gewählt ist, dass der radiale Hub mindestens 0,13 mm, bevorzugt mindestens 0,15 mm, besonders bevorzugt mindestens 0,17 mm beträgt. Solche radiale Hube sind geeignet, eine größeren Vielzahl der üblichen, unterschiedlich dimensionierten Objekte (z.B. Wellen) zu klemmen und/oder zu bremsen, und übliche thermisch bedingte Reibkontakte zu vermeiden. Bevorzugt beträgt die Länge (vgl. L₂ in Fig. 7) des Hebelarms von dem Drehpunkt (vgl. D in Fig. 7) bis zu dem Ende (vgl. 8b in Fig. 7) des Hebelarms 4 mm bis 8 mm, 5 mm bis 7 mm (z.B. etwa 5,5 mm), 6 mm bis 7 mm oder etwa 6,6 mm, was mehr ist als die entsprechende Länge L₁ bei konventionellen Vorrichtungen 10 ohne Einlegeplatte und was die Erzielung solch besonders vorteilhafter radialer Hube begünstigt.

Nach einem bevorzugten Aspekt der Erfindung definiert die ringförmige Aussparung jedes Gehäuseteils eine ringförmige Öffnung in dem Gehäuseteil , wobei die ringförmige Öffnung zwischen einem ersten ringförmigen Rand des Gehäuseteils und einem zweiten ringförmigen Rand des Gehäuseteils gebildet ist, wobei die erste Anlagefläche jedes Gehäuseteils durch den ersten ringförmigen Rand des Gehäuseteils und einen ersten Anschlag des Gehäuseteils derart begrenzt wird, dass bei Einbringen einer der Federplatten von Außen an dem ersten ringförmigen Rand vorbei in die Aussparung des Gehäuseteils hinein, der erste Anschlag ein Hindernis gegen ein tieferes Einbringen der Federplatte in die Aussparung hinein bildet, vorzugsweise wobei der Abstand zwischen dem ersten Anschlag und dem ersten ringförmigen Rand 3 mm bis 6 mm, 4 mm bis 5 mm, oder etwa 4,7 mm beträgt, und/oder wobei die zweite Anlagefläche jedes Gehäuseteils durch den zweiten ringförmigen Rand des Gehäuseteils und einen zweiten Anschlag des Gehäuseteils derart begrenzt wird, dass bei Einbringen einer der Federplatten von Außen an dem zweiten ringförmigen Rand vorbei in die Aussparung des Gehäuseteils hinein, der zweite Anschlag ein Hindernis gegen ein tieferes Einbringen der Federplatte in die Aussparung hinein bildet, vorzugsweise wobei der Abstand zwischen dem zweiten Anschlag und dem zweiten ringförmigen Rand 3 mm bis 6 mm, 4 mm bis 5 mm, oder etwa 4,7 mm beträgt. Solche ein oder mehrere Anschläge bewirken eine verlässlichere und Positionierung der Federplatte(n) und eine effektivere Einleitung der Federkraft der Federplatte(n) auf die zweite Anlagefläche, und damit eine verlässlichere und effektivere Öffnungs- und Schließfunktion. Auch werden durch solche Abstände die angesprochenen besonders vorteilhafte radiale Hube noch effektiver erzielt.

Nach einem bevorzugten Aspekt der Erfindung umfasst jedes der Gehäuseteile ein erstes Einrastmittel und ein zweites Einrastmittel, wobei die betreffende Federplatte in der Aussparung des Gehäuseteils derart zwischen der ersten Anlagefläche und der zweiten Anlagefläche des Gehäuseteils eingeklemmt ist, dass das erste Einrastmittel das erste Ende der betreffenden Federplatte an der ersten Anlagefläche einrastet und das zweite Einrastmittel das zweite Ende der betreffenden Federplatte an der zweiten Anlagefläche einrastet. Dem Aspekt der vorliegenden Erfindung liegt die Erkenntnis der Erfinder zugrunde, dass für die Öffnung- und Schließfunktion der Klemm- und/oder Bremsvorrichtung die axiale Positionierung der Federplatten innerhalb des Gehäuses der Klemm- und/oder Bremsvorrichtung von maßgeblicher Bedeutung ist. Insbesondere haben die Erfinder erkannt, dass die axiale Positionierung der Federplatten bei der Montage bisher maßgeblich vom axialen Einpressdruck abhängte und deshalb die Federplatten leicht unterschiedliche axiale Positionen innerhalb des Gehäuses einnehmen konnten. Die Erfinder haben erkannt, dass eine wohldefinierte und symmetrische Positionierung der Federplatten innerhalb des Gehäuses verlässlich erreicht werden sollte, um die gewünschte symmetrische Öffnung- und Schließfunktion der Klemm- und/oder Bremsvorrichtung verlässlich zu erzielen. Eine solche wohldefinierte und symmetrische Positionierung der Federplatten innerhalb des Gehäuses stellte bisher hohe Anforderungen an das axiale Einpressen der Federn in das Gehäuse während der Montage und hat sich in der Praxis bisher als schwierig und aufwendig erwiesen.

Vor diesem Hintergrund haben die Erfinder erkannt, dass durch ein Gehäuseteil, das ein erstes Einrastmittel und ein zweites Einrastmittel umfasst, die jeweils ausgelegt sind, ein anderes Ende einer eingeklemmten Federplatte einzurasten, eine vorbestimmte axiale Positionierung der Federplatten innerhalb eines Gehäuses einer pneumatischen Klemm- und/oder Bremsvorrichtung erreicht wird, die nicht mehr maßgeblich von der axialen Einpresskraft bei der Montage abhängt, sondern eine wiederholbar, wohldefinierte und symmetrische Positionierung der Federplatten innerhalb des Gehäuses der Klemm- und/oder Bremsvorrichtung erreicht wird.

Das erste Einrastmittel kann ausgelegt sein, insbesondere im Betrieb der Klemm- und/oder Bremsvorrichtung , das erste Ende der Federplatte in einer vordefinierten Position im Bezug auf die erste Auflagefläche zu halten und/oder, das zweite Einrastmittel kann ausgelegt sein, insbesondere im Betrieb der Klemm- und/oder Bremsvorrichtung , das zweite Ende der Federplatte in einer vordefinierten Position im Bezug auf die zweite Auflagefläche zu halten.

Die Einrastmittel haben sich in der Praxis auch bei der Montage bewährt, da sie die Montage der Federplatten sogar vereinfachen. Hinzu kommt, dass die Einrastmittel weitere Vorteile der im Folgenden beschriebenen Art bewirken, wie beispielweise eine verbesserte Dichtheit innerhalb des Gehäuses, so dass sich die Einrastmittel vielfältig positiv auf den Betrieb des Gesamtsystems der Klemm- und/oder Bremsvorrichtung auswirken.

Nach einem bevorzugten Aspekt der Erfindung umfasst das erste Einrastmittel einen ersten Vorsprung der ersten Anlagefläche und den ersten Anschlag, die zusammen das erste Ende der betreffenden Federplatte zwischen dem ersten Vorsprung und dem ersten Anschlag im Bereich der ersten Anlagefläche einrasten, und/oder, das zweite Einrastmittel umfasst einen zweiten Vorsprung der zweiten Anlagefläche und den zweiten Anschlag, die zusammen das zweite Ende der betreffenden Federplatte zwischen dem zweiten Vorsprung und dem zweiten Anschlag im Bereich der zweiten Anlagefläche einrasten. Durch diese spezielle Realisierung der ersten und zweiten Einrastmittel wird eine besonders effektive und symmetrische Einrastung der Federplatten bewirkt, die aber auch gleichzeitig das Einführen der Federplatten in die Gehäuseteile erleichtern und keine zusätzlichen Bauteile und Materialien für das Gehäuse erfordern, was vorteilhaft für die Herstellung und Montage ist.

Jeder der Vorsprünge kann einen Höhenübergang zwischen zwei angrenzenden Bereichen der dazugehörigen Anlagefläche umfassen. Einer der beiden Bereiche kann zwischen dem betreffenden Anschlag und dem Höhenübergang liegen und der Bereich sein, an dem ein Ende der Federplatte anliegt, und der andere Bereich kann der Bereich zwischen Höhenübergang und dem betreffenden ringförmigem Rand der ringförmigen Öffnung der Aussparung sein. Jeder der Vorsprünge kann als Höhenübergang eine Stufe oder Rampe umfassen. Die Rampe kann eine schiefe Ebene sein, kann aber auch anders geformte Schrägen aufweisen, wie beispielsweise eine Krümmung. Andere Ausgestaltungen der Vorsprünge sind jedoch ebenso denkbar.

Bevorzugt kann erste Anschlag eine längere Ausdehnung in radialer Richtung der ringförmigen Aussparung haben als der erste Vorsprung und/oder, der zweite Anschlag kann eine längere Ausdehnung in radialer Richtung der ringförmigen Aussparung haben als der zweite Vorsprung. Besonders bevorzugt kann jeder der Vorsprünge um 0,025 mm bis 0,15 mm, bevorzugt 0,05 mm bis 0,1 mm, besonders bevorzugt um 0,1 mm oder 0,05 mm gegenüber der jeweiligen Anlagefläche in einer radialen Richtung der ringförmigen Aussparung in die Aussparung hinein vorstehen. Ein solches Vorstehen durch die Vorsprünge kann besonders vorteilhaft für die verlässlich Einrastung der Federplatten im Hinblick auf übliche Verkürzungen der Feder im Betrieb einerseits und das einfache Einführen der Federplatten in die Gehäuseteile andererseits sein.

Nach einem bevorzugten Aspekt der Erfindung kann der erste Vorsprung zwischen dem ersten ringförmigen Rand und dem ersten Anschlag auf der ersten Anlagefläche des jeweiligen Gehäuseteils im Bereich der Aussparung angeordnet sein, vorzugsweise kann der erste Vorsprung, oder die Stufe oder die Rampe des ersten Vorsprungs, in einem Abstand von 2 mm bis 6 mm, 3 mm bis 5 mm, 3 mm bis 4 mm, oder etwa 3,2 mm von dem ersten ringförmigen Rand auf der ersten Anlagefläche des Gehäuseteils im Bereich der Aussparung angeordnet sein, und/oder, wobei der zweite Vorsprung zwischen dem zweiten ringförmigen Rand und dem zweiten Anschlag auf der zweiten Anlagefläche des jeweiligen Gehäuseteils im Bereich der Aussparung angeordnet ist, vorzugsweise wobei der zweite Vorsprung , oder die Stufe oder die Rampe des zweiten Vorsprungs, in einem Abstand von 2 mm bis 6 mm, 3 mm bis 5 mm, 3 mm bis 4 mm, oder etwa 3,2 mm von dem zweiten ringförmigen Rand auf der zweiten Anlagefläche des Gehäuseteils im Bereich der Aussparung angeordnet ist. Solch Anordnung der ein oder mehreren Vorsprünge bewirkt eine verlässlichere und effektivere Einrastung und Einleitung der Federkraft der Federplatte(n) mit üblichen Dicken, und ggf. vorliegenden Gummierungen der Federplatte(n), auf das Objekt und damit eine symmetrische und effektivere Öffnungs- und Schließfunktion für solche Federplatten. Auch werden durch solche Abstände die angesprochenen besonders vorteilhafte radiale Hube für solche Federplatten noch effektiver erzielt.

Die ringförmige Aussparung kann eine ringförmige Öffnung im Gehäuseteil definieren, wobei die ringförmige Öffnung zwischen einem ersten ringförmigen Rand des Gehäuseteils und einem zweiten ringförmigen Rand des Gehäuseteils gebildet ist. Bevorzugt kann der erste Vorsprung zwischen dem ersten ringförmigen Rand und dem ersten Anschlag auf der ersten Anlagefläche des Gehäuseteils im Bereich der Aussparung angeordnet sein. Der Höhenübergang (z.B. die Stufe oder Rampe) des ersten Vorsprungs kann auf der ersten Anlagefläche sein. In einem Abstand von 3 mm bis 6 mm, bevorzugt 3 mm bis 5 mm, besonders bevorzugt 3 mm bis 4 mm oder 3,2 mm von dem ersten ringförmigen Rand kann der Höhenübergang des ersten Vorsprungs auf der ersten Anlagefläche an der Innenseite des Gehäuseteils im Bereich der Aussparung vorzugsweise angeordnet sein und der erste Vorsprung kann sich über diesen Abstand hinweg erstrecken. Der erste Vorsprung kann sich kontinuierlich von dem ersten ringförmigen Rand bis zu dem Höhenübergang erstrecken. Bevorzugt kann der zweite Vorsprung zwischen dem zweiten ringförmigen Rand und dem zweiten Anschlag auf der zweiten Anlagefläche des Gehäuseteils im Bereich der Aussparung angeordnet sein. Der Höhenübergang (z.B. die Stufe oder Rampe) des zweiten Vorsprungs kann auf der zweiten Anlagefläche sein. In einem Abstand von 3 mm bis 6 mm, bevorzugt 3 mm bis 5 mm, besonders bevorzugt 3 mm bis 4 mm oder 3,2 mm von dem ersten ringförmigen Rand kann der Höhenübergang des zweiten Vorsprungs auf der zweiten Anlagefläche an der Innenseite des Gehäuseteils im Bereich der Aussparung vorzugsweise angeordnet sein und der zweite Vorsprung kann sich über diesen Abstand hinweg erstrecken. Der zweite Vorsprung kann sich kontinuierlich von dem zweiten ringförmigen Rand bis zu dem Höhenübergang erstrecken. Eine solche Anordnung der Vorsprünge bzw. Stufen oder Rampen kann besonders vorteilhaft für die verlässliche Positionierung der Federplatten innerhalb der Aussparung bzw. des Gehäuses im Hinblick auf übliche Betriebsparameter der Klemmvorrichtung einerseits und das einfache Einführen der Federplatten in die Gehäuseteile andererseits sein.

Sofern diese Kurzbeschreibung der Erfindung Merkmale beschreibt, die nicht in den Patentansprüchen aufgeführt sind, so stellen diese Merkmale keine wesentlichen Merkmale in dem Sinne dar, dass diese Merkmale zwangsläufig zur Beschreibung der Erfindung in die Patentansprüche aufzunehmen sind, jedoch sind diese Merkmale besonders prominente bevorzugte Realisierungen der beanspruchten Erfindung, können mit jedem der Patentansprüche kombiniert werden und können auch untereinander beliebig kombiniert werden.

### KURZBESCHREIBUNG DER FIGUREN

Figur 1A zeigt einen schematischen Querschnitt durch eine erfindungsgemäße nach innen gerichtete, passive pneumatische Klemm- und/oder Bremsvorrichtung im geschlossenen Zustand.
Figur 1B zeigt einen schematischen Querschnitt durch eine erfindungsgemäße nach außen gerichtete, passive pneumatische Klemm- und/oder Bremsvorrichtung im geschlossenen Zustand.
Figur 2A zeigt einen schematischen Querschnitt durch eine erfindungsgemäße nach innen gerichtete, passive pneumatische Klemm- und/oder Bremsvorrichtung im offenen Zustand.
Figur 2B zeigt einen schematischen Querschnitt durch eine erfindungsgemäße nach außen gerichtete, passive pneumatische Klemm- und/oder Bremsvorrichtung im offenen Zustand.
Figur 3A zeigt einen schematischen Querschnitt durch eine erfindungsgemäße nach innen gerichtete, aktive pneumatische Klemm- und/oder Bremsvorrichtung im offenen Zustand.
Figur 3B zeigt einen schematischen Querschnitt durch eine erfindungsgemäße nach außen gerichtete, aktive pneumatische Klemm- und/oder Bremsvorrichtung im offenen Zustand.
Figur 4A zeigt einen schematischen Querschnitt durch eine erfindungsgemäße nach innen gerichtete, aktive pneumatische Klemm- und/oder Bremsvorrichtung im geschlossenen Zustand.
Figur 4B zeigt einen schematischen Querschnitt durch eine erfindungsgemäße nach außen gerichtete, aktive pneumatische Klemm- und/oder Bremsvorrichtung im geschlossenen Zustand.
Figur 5A zeigt einen Querschnitt durch eine erfindungsgemäße pneumatische Klemm- und/oder Bremsvorrichtung in dreidimensionaler Darstellung.
Figuren 5B bis 5D zeigen eine erfindungsgemäße Variante eines aus Figur 5A entnommenen Gehäuseteils.
Figuren 6A bis 6B zeigen jeweils im oberen Bereich der jeweiligen Figur die Varianten des Gehäuseteils wie in den Figuren 5B bis 5D dargestellt.

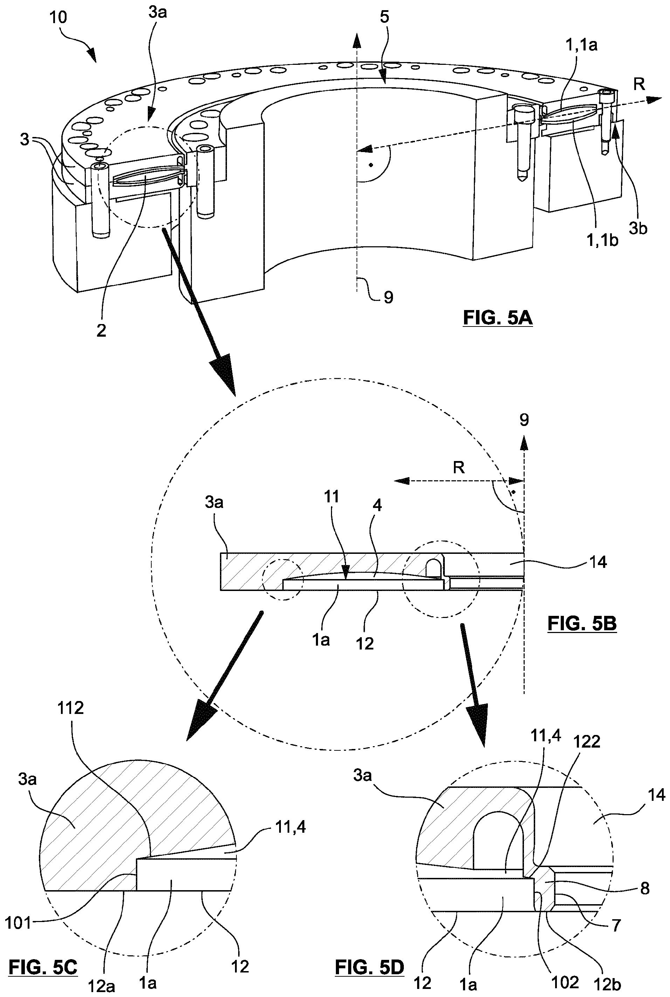

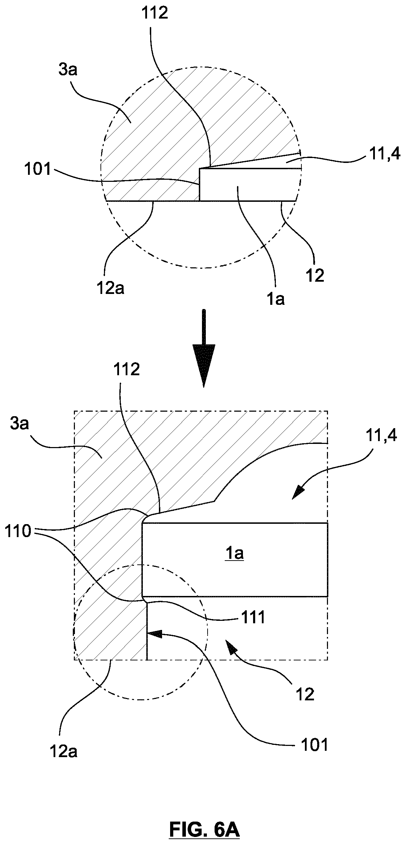

Figuren 6A bis 6B zeigen jeweils im unteren Bereich der jeweiligen Figur eine besonders bevorzugte erfindungsgemäße Variante eines aus Figur 5A entnommenen Gehäuseteils.

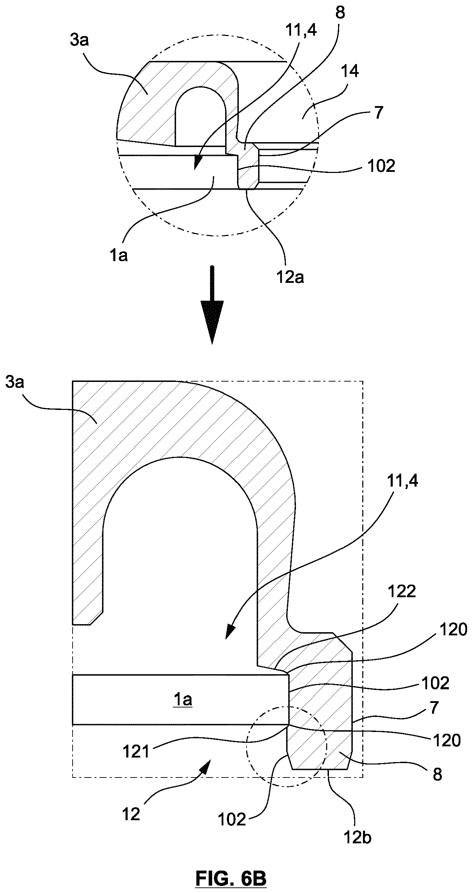

Figur 7 zeigt eine besonders bevorzugte Ausführungsform der erfindungsgemäßen Klemm- und/oder Bremsvorrichtung mit einem Gehäuseteils gemäß Figur 6B.

Bauteile, die in mehreren Figuren dargestellt sind, tragen dieselben Referenzzeichen.

### DETAILLIERTE BESCHREIBUNG

Die Erfindung betrifft ein Gehäuseteil für eine pneumatische Klemm- und/oder Bremsvorrichtung und eine pneumatische Klemm- und/oder Bremsvorrichtung mit einem erfindungsgemäßen Gehäuseteil.

Wenn in diesem Dokument von der Vorrichtung "Klemme" oder "Klemmvorrichtung", der "Klemmkraft" oder dem Vorgang des "Klemmens" gesprochen wird, dann ist gleichermaßen auch die Vorrichtung der "Bremse" oder "Bremsvorrichtung" bzw. die "Bremskraft" bzw. der Vorgang des "Bremsens" umfasst.

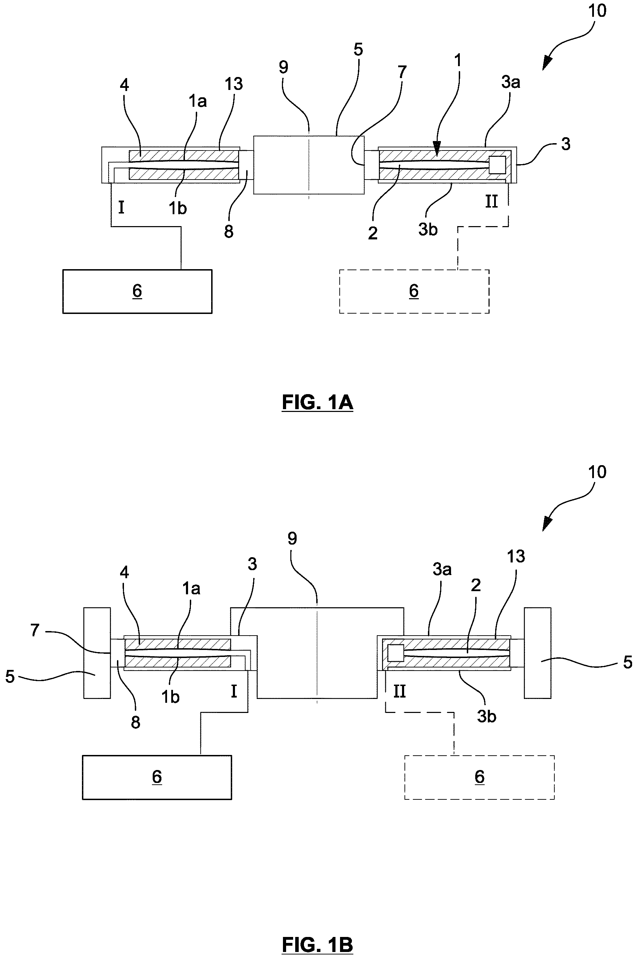

Die Figuren 1A bis 5A zeigen schematisch Querschnitte durch eine solche erfindungsgemäße pneumatische Klemmvorrichtung 10 mit einem Gehäuse 3, das zwei Gehäuseteile 3a, 3b umfasst, sowie mit einer in dem Gehäuse 3 angeordneten Feder 1, die mindestens zwei ringförmige Federplatten 1a, 1b umfasst.

Die erfindungsgemäße Klemmvorrichtung 10, umfasst dabei Folgendes: ein Gehäuse 3 umfassend ein erstes Gehäuseteil 3a und ein zweites Gehäuseteil 3b, wobei jedes der Gehäuseteile 3a, 3b eine ringförmige Aussparung 11 (vgl. Fig. 6A bis 7) umfasst, die eine erste Anlagefläche 101 des Gehäuseteils 3a, 3b und eine zweite Anlagefläche 102 des Gehäuseteils 3a, 3b definiert, und wobei die beiden Gehäuseteile 3a, 3b derart zueinander angeordnet und miteinander befestigt sind, dass die Aussparungen 11 der ersten und zweiten Gehäuseteile 3a, 3b zusammen einen Innenraum 13 innerhalb des Gehäuses 3 bilden; eine in dem Innenraum 13 angeordnete Feder 1 umfassend eine erste ringförmige Federplatte 1a und eine zweite ringförmige Federplatte 1b, wobei die erste ringförmige Federplatte 1a in der ringförmigen Aussparung 11 des ersten Gehäuseteils 3A zwischen der ersten Anlagefläche 101 und der zweiten Anlagefläche 102 des ersten Gehäuseteils 3A eingeklemmt ist, und wobei die zweite ringförmige Federplatte 1b in der ringförmigen Aussparung 11 des zweiten Gehäuseteils 3A zwischen der ersten Anlagefläche 101 und der zweiten Anlagefläche 102 des zweiten Gehäuseteils 3A eingeklemmt ist; mindestens ein Klemmelement 8, wobei jedes Klemmelement 8 eine Klemmfläch7 aufweist, die ausgelegt ist, wenn sich ein erstes Ende einer der Federplatten 1a, 1b an der ersten Anlagefläche 101 eines der Gehäuseteile 3a, 3b abstützt und ein zweites Ende der einen der Federplatten 1a, 1b auf die zweite Anlagefläche 102 des einen der Gehäuseteile 3a, 3b drückt, eine Klemm- und/oder Bremskraft F₃ (vgl. Fig. 7) auf das zu klemmende und/oder zu bremsende Objekt 5 zu übertragen; wobei die Federplatten 1a, 1b derart innerhalb des Innenraums 13 angeordnet sind, dass in dem Innenraum 13 mindestens ein Druckraum 2, 4 gebildet wird, der zumindest teilweise durch die Federplatten 1a, 1b begrenzt wird, wobei der Druckraum 2, 4 be- oder entlüftbar ist und mit Überdruck eines dem Gehäuse 3 zuführbaren Druckmediums beaufschlagbar ist, wobei die Federplatten 1a, 1b derart relativ zu den mindestens einen Druckraum 2, 4 angeordnet sind, dass durch Be- oder Entlüften des Druckraums 2, 4 oder Beaufschlagung des Druckraum 2, 4 mit Überdruck, eine Biegung mindestens einer der Federplatten 1a, 1b veränderbar ist und dadurch die Klemm- und/oder Bremsvorrichtung 10 zwischen einem geöffneten Zustand, in dem das Objekt 5 nicht von einer bzw. irgendeiner der Klemmflächen 7 berührt wird sondern von den Klemmflächen 7 beabstandet ist, und einem geschlossenen Zustand, in dem ein oder mehrere der Klemmflächen 7 eine Klemm- und/oder Bremskraft auf das Objekt 5 übertragen, wechselt. Die erfindungsgemäße Klemm- und/oder Bremsvorrichtung 10 umfasst ferner mindestens eine Einlegeplatte 100 (vgl. Fig. 7), die zwischen der ersten Federplatte 1a und der zweiten Federplatte 1b in dem Innenraum 13 angeordnet ist. Die Vorrichtung 10 kann beispielsweise von dem geschlossenen Zustand in den geöffneten Zustand wechseln oder umgekehrt.

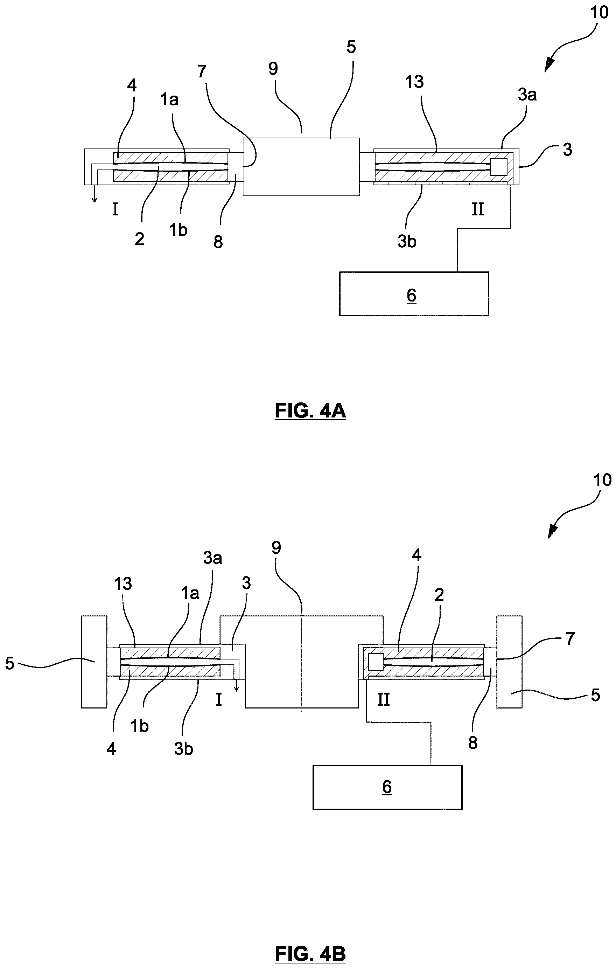

Die Figuren 1A, 1B, 4A und 4B zeigen jeweils solche Klemmvorrichtungen 10 im geschlossenen Zustand indem die Klemmfläche 7 des Klemmelements 8 den Umfang des Objekts 5 berührt. Das Klemmelement 8 wird auch als Klemmlippe bezeichnet. Das Klemmelement 8 kann einstückig mit den Übrigen Teilen des Gehäuseteils 3a, 3b ausgebildet sein oder kann ein von den übrigen Teilen strukturell separiertes Bauteil des Gehäuseteils 3a, 3b sein.

Die Klemmkraft F₃ (vgl. Fig. 7) bzw. Klemmwirkung der Klemmfläche 7 auf das zu klemmende Objekt 5 erfolgt in einer Klemmebene, die durch zwei Vektoren aufgespannt wird, die jeweils einen Radius der ringförmigen Federplatten 1a, 1b bzw. ringförmigen Aussparung 11 bilden (vgl. Fig. 5A). Die Achse 9 kann als Hauptachse der Klemmvorrichtung 10 bezeichnet werden, die senkrecht zur Klemmebene verläuft. Die Klemmvorrichtung 10 kann um diese Hauptachse 9 rotationssymmetrisch ausgestaltet sein. Die Hauptachse 9 kann in etwa oder genau mittig durch eine Öffnung der Klemmvorrichtung 10 verlaufen (Öffnung 14 in Fig. 5B). In den Figuren 1A, 4A ist das zu klemmende Objekt 5, beispielsweise eine rotierbare Welle einer Maschine oder eines Tischs, innerhalb der Öffnung 14 platziert und die Klemmkraft der Klemmvorrichtung ist deshalb innerhalb der Klemmebene radial nach innen zur Hauptachse 9 hin (senkrecht zur Hauptachse 9) gerichtet. In Figuren 1B, 4B ist das zu klemmende Objekt 5 außerhalb der Klemmvorrichtung 10 platziert und die Klemmkraft der Klemmvorrichtung ist deshalb innerhalb der Klemmebene radial nach außen von der Hauptachse 9 weg (senkrecht zur Hauptachse 9) gerichtet.

In Fig. 1A, 2A, 3A, 4A befindet sich das Klemmelement 8 zwischen Feder 1 und Öffnung 14 bzw. Hauptachse 9. In Fig. 1B, 2B, 3B, 4B hingegen umgibt das zu klemmende Objekt 5 zumindest teilweise die Klemmvorrichtung 10, sodass sich dort das Klemmelement 8 zwischen Objekt 5 und Öffnung 14 bzw. Hauptachse 9 befindet. In Fig. 1B, 2B, 3B, 4B kann in Öffnung 14 statt dem zu klemmenden Objekt 5 ein die Öffnung 14 zumindest teilweise füllendes Bauteil eingebracht sein, durch das sich die Hauptachse 9 erstreckt.

In Figuren 1A bis 5A ist jeweils die Feder 1 zwischen zwei Anlageflächen (101 und 102 in Fig. 5C und 5D) innerhalb des Gehäuses 3 der Klemmvorrichtungen 10 eingeklemmt und erstreckt sich zwischen den beiden Anlageflächen. Im drucklosen Ausgangszustand der Vorrichtung 10 in den Figuren 1A bis 2B kann die Feder 1 leicht gebogen sein, um in diesem Zustand fest im Gehäuse 3 fixiert zu sein und dasselbe kann für jeden anderen Zustand der Vorrichtung 10 gelten, wobei der Grad der Biegung der Feder 1 davon abhängt, in welchem Zustand sich die Vorrichtung 10 befindet. Ist die Vorrichtung 10 in einem Zustand, in dem die Feder 1 gebogen ist (z.B. stärker gebogen als im drucklosen Ausgangszustand, wie etwa im geöffneten Zustand), kann Entlüften eines inneren Druckraums 2 der Feder 1 und Belüftung eines äußeren Druckraums 4 zum zumindest teilweisen Entspannen der Feder 1 führen während die Feder 1 an die radialen Anlageflächen drückt, deren Abstand sich etwas vergrößert, so dass dadurch das Gehäuse 3 im Bereich des Klemmelements 8 bzw. der Klemmfläche 7 elastisch verformt wird und die Klemmfläche 7 dadurch das Objekt 5 berührt und mit einer (vordefinierten) Klemmkraft gegen das Objekt 5 gedrückt wird, um das Objekt 5 festzuklemmen. Das Objekt 5 ist festgeklemmt und die Klemmvorrichtung 10 ist im geschlossenen Zustand, wie in Figuren 1A und 1B gezeigt. Im geschlossenen Zustand der Vorrichtung 10 kann die Feder 1 auch nach der teilweisen Entspannung immer noch leicht gebogen sein, um in diesem Zustand fest im Gehäuse 3 fixiert zu sein.

Das Klemmelement 8 kann dabei ein elastisches Element, wie etwa eine Federgabel, sein, das im drucklosen Ausgangszustand der Vorrichtung 10 durch die Federkraft F₂ (vgl. Fig. 7) der (leicht) verbogenen Feder 1 aus einer Ausgangsposition, in der das elastische Element entspannt ist, in eine verspannte Position gebracht wird, beispielsweise durch Verbiegen der Federgabel 8, bis im drucklosen Ausgangszustand ein Gleichgewicht zwischen einer Rückstellkraft des elastischen Elements 8 und der Federkraft der Feder 1 entsteht. Bei diesem Gleichgewicht kann beispielsweise die Klemmfläche 7 gegen das Objekt 5 mit der Klemmkraft F₃ drücken.

Durch zusätzliche Beaufschlagung des äußeren Druckraums 4 im geschlossenen Zustand mit Druckluft (beispielsweise mit 4 bar oder 6 bar) besteht die optionale Möglichkeit die Klemmkraft um einen vorbestimmten Wert zu erhöhen. Dies ist in den Figuren 1A, 1B durch die optionale zusätzliche Druckluftpumpe (Booster) 6 und die Schraffierung (Druckluft) im äußeren Druckraum 4 angedeutet. Der äußere Druckraum 4 kann mittels einer Öffnung im Gehäuse 3 mit einem Luftanschluss II (auch als "Close" bezeichnet) verbunden sein, an dem die Druckluftpumpe 6 angeschlossen sein kann.

Hierdurch ist z.B. ein Ansteuern der Vorrichtung 10 derart möglich, dass ein Wechsel zwischen einer (im drucklosen Zustand) gebremsten Bewegung des beaufschlagten Objekts 5 und einem vollständigen Klemmen des Objekts (bei einer ausreichenden Druckbeaufschlagung) erfolgt.

Auch wenn hier beispielhaft zwei Druckräume 2, 4 gezeigt und beschrieben sind, so ist die Klemmvorrichtung 10 auch mit einem einzigen Druckraum betreibbar, der beispielsweise der innere Druckraum 2 oder der äußere Druckraum 4 sein kann.

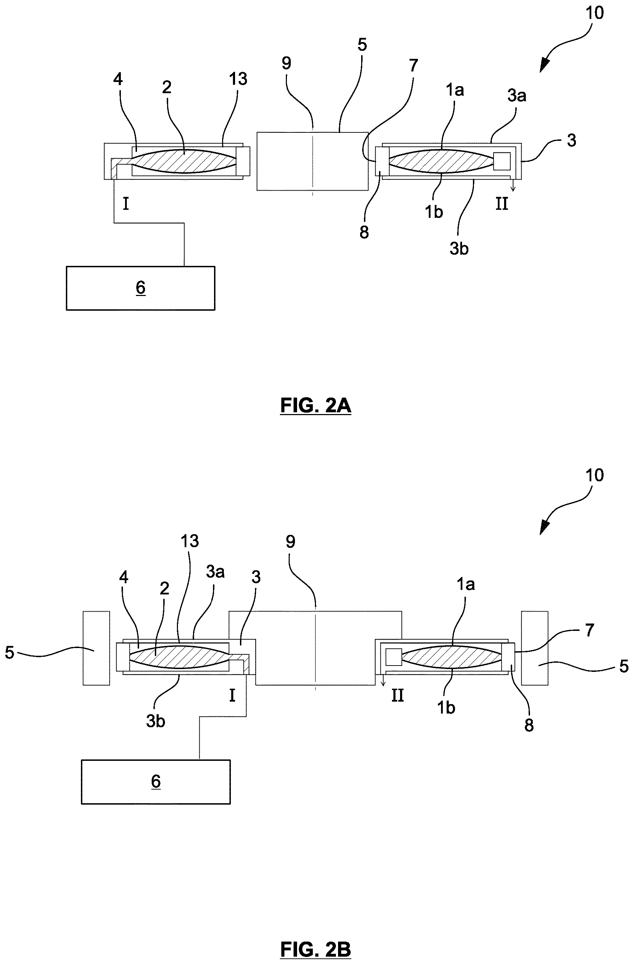

Figuren 2A und 2B zeigen die Klemmvorrichtungen 10 aus den Figuren 1A und 1B jeweils im geöffneten Zustand in dem die Klemmfläche 7 den Umfang des Objekts 5 nicht berührt bzw. von dem Umfang des Objekts beabstandet ist. Der innere Druckraum 2 kann mittels einer Öffnung im Gehäuse 3 mit einem Luftanschluss I (auch als "Open" bezeichnet) verbunden sein, an dem eine Druckluftpumpe 6 angeschlossen sein kann.

Durch Beaufschlagung des inneren Druckraums 2 durch die Druckluftpumpe 6 mit Druckluft (beispielsweise 4 bar oder 6 bar) und Entlüften des äußeren Druckraums 4 wird die Feder 1, verglichen mit dem geschlossenen Zustand aus Fig. 1A, 1B, stärker (konvex) verbogenen bzw. verspannt und es kommt zu einer radialen Verkürzung der Feder 1 bzw. des Abstandes zwischen den beiden Anlageflächen. Die Klemmfläche 7 hebt von dem Objekt 5 ab, um die Klemmung aufzuheben. Das Objekt 5 ist frei beweglich (z.B. um Achse 9 rotierbar oder linear entlang Achse 9 beweglich) und die Klemmvorrichtung 10 ist geöffnet.

Zwischen dem geschlossenen Zustand und dem geöffneten Zustand der Vorrichtung 10 kann hin- und her gewechselt werden.

Solche pneumatischen Klemmen 10 haben gegenüber hydraulischen Klemmen einer Reihe von Vorteilen.

Durch die Verwendung der Kombination aus elastischer Komponente, hier eine Feder 1 samt Federplatten 1a, 1b, und Druckluft werden beispielsweise sehr kurze Reaktionszeiten beim Umschalten zwischen dem geöffneten und geschlossenen Zustand erreicht und ebenso eine sichere Klemmung des Objekts 5 bewirkt. Die Feder 1 kann bevorzugt plattenförmig ausgestaltet sein, wie in Fig. 5 näher gezeigt, wobei zwei aufeinanderliegende Federplatten 1a, 1b die Feder 1 und den inneren Druckraum 2 der Feder 1 zwischen den Platten 1a, 1b bilden. Die Platten 1a, 1b können ebenfalls ringförmig sein, wie in Fig. 5 gezeigt, und können optional zusätzlich radiale Schlitze aufweisen, so dass eine Veränderung des Innendurchmessers mit besonders geringen Kräften möglich ist. Die Federplatten 1a, 1b können, zumindest im Bereich von Schlitzen, mit Gummi beschichtet sein, um die für die Druckluft nötige Dichtheit herzustellen. Die Federplatten 1a, 1b können auch vollständig mit Gummi ummantelt sein. Die Federplatten 1a, 1b sind generell so druckfest und so elastisch biegbar ausgebildet und in dem Gehäuse 3 der Klemmvorrichtung 10 derart angeordnet, dass innerhalb der Feder 1 zwischen den Federplatten 1a, 1b der innere Druckraum 2 gebildet wird und zwischen einer jeden Federplatte 1a, 1b und dem Gehäuse 3 bzw. den Gehäuseteilen 3a, 3b der Klemmvorrichtung 10 der äußere Druckraum 4 gebildet wird. Figur 5 zeigt eine dreidimensionale Ansicht einer Klemmvorrichtung 10 ähnlich zu Figuren 1A und 2A.

Durch Belüften oder Beaufschlagen mit Druckluft des äußeren Druckraums 4 und Entlüften des inneren Druckraums 2, wie in Fig. 1A gezeigt, wird die Feder 1 zumindest teilweise entspannt und bewirkt eine Klemmkraft auf das zu klemmende Objekt 5, insbesondere auf den Umfang einer Welle 5. Dadurch wird bei Energie- bzw. Druckausfall das Objekt 5 geklemmt bzw. die Welle 5 sofort zum Stillstand gebracht und bietet deshalb eine Sicherheitsklemmung. Solche pneumatischen Klemmen 10 können je nach Größe Haltemomente von mehreren 100 Nm und bis zu mehreren 1000 Nm erzielen, die durch zusätzliches Beaufschlagen des äußeren Druckraums 4 mit Druckluft, wie in Fig. 1A durch eine Druckpumpe 6 (Booster) angedeutet, noch erhöht werden können. Hier genügt eine Druckluft von wenigen bar (beispielsweise 4 bar oder 6 bar) für eine Bereitstellung eines Mehrfachen der Haltemomente, die ohne Booster erreicht werden. Dabei wird die Tatsache genutzt, dass geringe transversale Verbiegungen der Platten 1a, 1b (senkrecht zu deren Längsachse) beim Umschalten zwischen geöffneten und geschlossenen Zustand der Klemme 10 große Federkräfte erzeugen, die zum Klemmen oder zum Lösen vorgespannter Klemmvorrichtungen 10 genutzt werden können. Somit wird ein sicheres Klemmen und Lösen auch von sich schnell drehenden Maschinenwellen 5 ermöglicht.

Auch sind bei Pneumatikmaterial die Kosten und der Montageaufwand im Vergleich zur Hydraulikmaterial niedriger und es entsteht durch Verwendung von Druckluft keinerlei Mehraufwand zur Herstellung von Sauberkeit an der Anlage. Auch ermöglichen solche pneumatischen Klemmen eine geringe Baugröße, da eine geringe transversale Verbiegung und eine geringe (Änderungen der) longitudinale Ausdehnung der Feder, und dadurch geringe Volumina der Druckräume, genügen, um die erforderlichen Klemmkräfte aufzubringen.

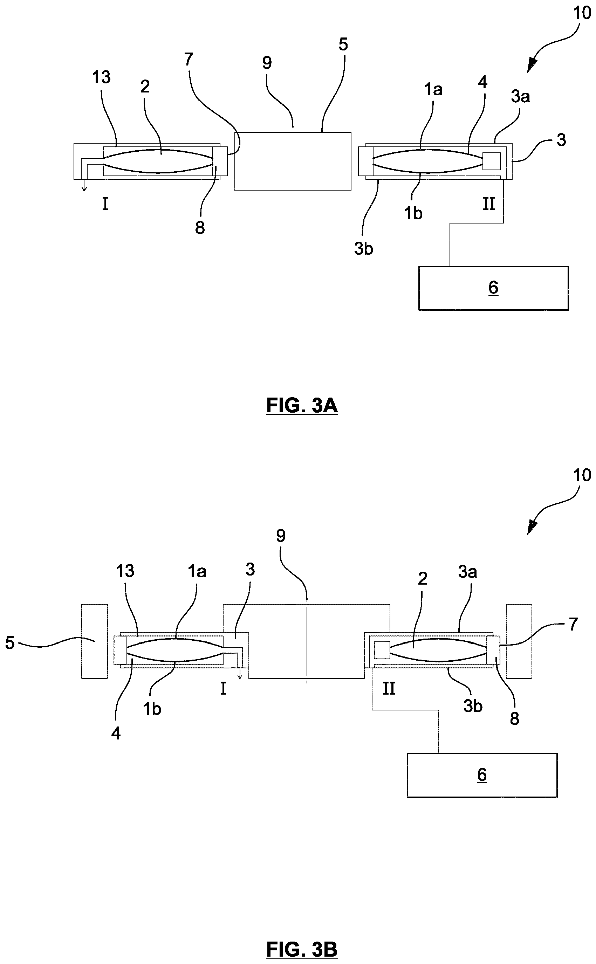

Bei pneumatischen Klemmen unterscheidet man prinzipiell zwischen passiven Klemmvorrichtungen 10, wie in Fig. 1A bis 2B gezeigt, und aktiven Klemmvorrichtungen 10, wie in Fig. 3A bis 4B gezeigt.

Die Feder 1 kann im drucklosen Ausgangszustand unterschiedlich stark (transversal) verbogen sein und damit unterschiedlich stark radial verkürzt sein. Die Innenseite des Gehäuses 3 kann an die Verbiegung der Federplatten 1a, 1b angepasst sein oder diese definieren. Eine entsprechende Anschlagsfläche für die Federplatten 1a, 1b kann beispielsweise durch eine Gehäuseinnenwandung gebildet werden. Die Gehäuseinnenwandung kann komplementär (z.B. konkav) zu einer (z.B. konvexen) Verbiegung der Federplatten 1a, 1b ausgebildet sein.

Bei passiven Klemmvorrichtungen 10 wird im drucklosen Ausgangszustand die Feder 1 in der Regel leicht elastisch (z.B. konvex) verbogen bzw. ist vorgespannt und die Klemmvorrichtungen 10 kann geschlossen sein (Fig. 1A, 1B). Die Klemmvorrichtung 10 wird nur durch Krafteinwirkung von Innen über Beaufschlagung des inneren Druckraums 2 mit Druckluft geöffnet (Fig. 2A, 2B). Meist ist die Feder 1 im drucklosen Ausgangszustand etwas verbogen, so dass diese im Klemmfall oder im Fall von Druckabfall die durch die in der Feder 1 gespeicherte Energie gegebene Federkraft auf das zu klemmende Objekt 5 als Klemmkraft übertragen wird, um das Objekt 5 zu klemmen.

Bei aktiven Klemmvorrichtungen 10 wird im drucklosen Ausgangszustand (Fig. 3A, 3B) die Feder 1 stärker, insbesondere stärker konvex, transversal nach außen gekrümmt als bei passiven Klemmvorrichtungen, so dass sich der Abstand zwischen den beiden radialen Anlageflächen verkürzt und die Klemmvorrichtung 10 geöffnet ist. Es wird keine Klemmkraft über Klemmfläche 7 auf das Objekt 5 bewirkt. Das Objekt ist frei, da die Klemmfläche 7 das Objekt 5 nicht berührt bzw. von dem Objekt 5 beabstandet ist.

Durch plastische Verformung der Federplatten 1a, 1b kann die Feder 1 bei gleichem Gehäuse 3 im drucklosen Ausgangszustand stärker transversal nach außen gekrümmt und damit stärker radial verkürzt sein, als bei passiven Klemmvorrichtungen. Diese geringere radiale Ausdehnung der Federplatten 1a, 1b im drucklosen Ausgangszustand kann zu einem geöffneten Zustand der Klemmvorrichtung 10 im drucklosen Ausgangszustand führen. Auch bei plastischer Verformung sind die Federplatten 1a, 1b elastisch gebogen und drücken gegen die Anlageflächen damit die Feder im Gehäuse fixiert ist. Der Innenraum des Gehäuses bzw. die Aussparungen können die durch plastische Verformung stärker bewirkte Krümmung im Ausgangszustand aufnehmen.

Die Klemmkraft muss nun aktiv von außen induziert werden, wie in Fig. 4A und 4B gezeigt, um die Klemme in den geschlossenen Zustand zu überführen. Hier wird durch eine Druckluftpumpe 6 Druckluft in den äußeren Druckraum 4 eingebracht und somit die Feder 1 derart von außen mit Druckluft beaufschlagt, dass die Feder 1 aktiv entspannt wird, sich die Krümmung der Feder 1 reduziert, sich der Abstand zwischen den beiden Anlageflächen vergrößert, und sich das Gehäuse 3 im Bereich des Klemmelements 8 bzw. der Klemmfläche 7 elastisch verformt, sodass die Klemmfläche 7 das Objekt 5 berührt und eine Klemmkraft auf das Objekt 5 bewirkt und das Objekt 5 dadurch festgeklemmt wird. Die aktive Klemmvorrichtung 10 ist dann im geschlossenen Zustand.

Je nach Anwendungsgebiet und vorgeschriebenen Sicherheitsbestimmungen wird daher auf ein Aktiv- oder Passivklemmsystem 10 zurückgegriffen. Ist primär eine Sicherheitsklemmung gewünscht, wird in der Regel eine passive Klemmvorrichtung verwendet. Mit solchen pneumatischen Passivklemmsystemen ist es möglich, bereits im drucklosen Zustand bei einer entsprechenden Montage der Vorrichtung in einer Gesamtvorrichtung eine vorbestimmte Klemmkraft zu erzeugen, mit welcher das zu klemmende Objekt 5 beaufschlagt wird. Durch die Beaufschlagung mit Überdruck oder Unterdruck können die auf dieses Objekt übertragenen Kräfte erhöht, reduziert oder ganz aufgehoben werden, was vielfältige Anwendungen eröffnet. Soll hingegen mit der Klemmvorrichtung primär ein bewusster Arbeitsvorgang, wie ein Werkzeugwechsel, durchgeführt werden, wird in der Regel eine aktive Klemmvorrichtung verwendet.

Wie in Figur 5A dargestellt, umfasst das Gehäuse 3 der erfindungsgemäßen Klemmvorrichtungen 10 zwei Gehäuseteile 3a, 3b, die vorzugsweise mit Befestigungsmittel, wie etwa Schrauben, miteinander befestigt und so montiert sind, dass im montierten Zustand die beiden Gehäuseteile 3a, 3b einen Innenraum 13 zwischen den Gehäuseteilen 3a, 3b innerhalb des Gehäuses 3 definieren in dem die Feder 1 samt deren ringförmiger Federplatten 1a, 1b sowie die Einlegeplatte (in Fig. 5A nicht dargestellt) zwischen den Federplatten 1a, 1b angeordnet sind. Die Gehäuseteile 3a, 3b definieren jeweils eine Aussparung 11, die ebenfalls ringförmig ist und die der Aufnahme der ringförmigen Federplatten 1a, 1b dienen, wie in Figuren 5A, 5B dargestellt. Zumindest ein Teil der ersten Anlagefläche 101 kann (im Wesentlichen) senkrecht zur radialen Richtung R der ringförmigen Aussparung 11 verlaufen und/oder ein Teil der zweiten Anlagefläche 102 kann (im Wesentlichen senkrecht) zur radialen Richtung R der ringförmigen Aussparung 11 verlaufen.

Durch die Mitte des Gehäuses 3 hindurch erstreckt sich eine Öffnung 14 (Fg. 5B) in die das zu klemmende Objekt 5, wie etwa eine Welle, eingeführt werden kann. Das Gehäuse kann sich bis zu 360° um diese Öffnung herum erstrecken und umschließt zumindest teilweise das Objekt 5 in zumindest einer Ebene die als Klemmebene bezeichnet wird. Die zentrale Hauptachse 9 der Klemmvorrichtungen verläuft mittig durch die Öffnung 14 und senkrecht zu der Klemmebene. In Klemmvorrichtungen nach Fig. 1A, 2A, 3A, 4A, 5A verläuft die Hauptachse 9 mittig durch die Welle entlang deren Längsachse.

Entlang des Umfangs des Gehäuses 3 oder der Öffnung 14 befindet sich eine oder mehrere der Klemmflächen 7 welche im Falle einer elastischen Verformung des Gehäuses 3 im Bereich des Klemmelements 8 oder der Klemmfläche 7 die Klemmkraft auf den äußeren Umfang des Objekts 5 bewirkt und dadurch das Objekt 5 klemmen kann. Für eine wirksame Öffnung und Schließung der Klemmvorrichtung 10 im Bezug auf das zu klemmende Objekt 5, ohne Gefahr der Beschädigung des Objekts 5, ist eine symmetrische Verteilung der Klemmkraft entlang der Klemmfläche 7 bzw. entlang des Umfangs des Objekts 5 wünschenswert. Eine nicht symmetrische Verteilung der Klemmkraft kann zu Beschädigungen des Objekts 5 führen. Vorzugsweise sind eine oder beide Anlageflächen 101, 102 innerhalb der Klemmebene kreisförmig ausgestaltet. Vorzugsweise ist die Klemmfläche 7 innerhalb der Klemmebene kreisförmig ausgestaltet. Das Klemmelement 8 kann ringförmig ausgestaltet sein. Alle hierin beschriebenen ring- oder kreisförmigen Bauteile können jeweils einzeln oder in Kombination als Mittelpunkt den Schnittpunkt der Hauptachse 9 mit der Klemmebene aufweisen (z.B. Mittelpunkt der Öffnung 14).

Figur 5B zeigt eines der beiden Gehäuseteile 3a (hier das obere Gehäuseteil 3a aus Fig. 5A), sowie eine der beiden Federplatten 1a, 1b der Feder 1. Die dargestellte Federplatte 1a der Feder 1 erstreckt sich von einer ersten Anlageflächen 101 innerhalb des Gehäuseteils 3a bis zu einer zweiten Anlagefläche 102 innerhalb des Gehäuseteils 3a und kann diese berühren. Die erste Anlagefläche 101 ist dabei vom Mittelpunkt der Öffnung 14 ausgesehen radial weiter außerhalb angeordnet als die zweite Anlagefläche 102.

Figur 5C zeigt den Abschnitt des in Figur 5B dargestellten Gehäuseteils 3a in dem die obere Platte 1a der Feder 1 auf die erste Anlagefläche 101 trifft und mit dieser vorzugsweise in Berührung steht. Figur 5D zeigt den Abschnitt des in Figur 5B dargestellten Gehäuseteils 3a in dem die obere Platte 1a der Feder 1 auf die zweite Anlagefläche 102 trifft und mit dieser vorzugsweise in Berührung steht. Es ist jedoch auch möglich, dass sich radial zwischen der Federplatte 1a und ein oder mehreren der Anlageflächen 101, 102 jeweils ein oder mehrere weitere Komponenten befinden, über die die Federplatte 1a ihre Federkraft auf die Anlageflächen 101, 102 ausübt.

In den Figuren 5B bis 5D ist die erfindungsgemäße Einlegeplatte 100 (vgl. Fig. 7) zur vereinfachten Darstellung in dem dargestellte Gehäuseteil 3a ebenfalls nicht gezeigt. Wie in Figuren 5B, 5D ersichtlich, können die Innenseiten des Gehäuseteils 3a zwischen denen die Federplatte 1a in der Aussparung eingeklemmt wird und zwischen denen sich die Einlegeplatte erstreckt geradlinig bzw. eben ausgestaltet. Jede der Platten der Feder 1 wird in Richtung der Hauptachse 9 der Klemmvorrichtungen 10 durch die Öffnung 12 in die Aussparung 11 des jeweils dazugehörigen Gehäuseteils bei der Montage an geradlinigen bzw. ebenen Innenflächen des Gehäuseteils 3a entlang eingeführt, bis die jeweilige Platte am Ende jeder der beiden Anlageflächen 101, 102 an einen Anschlag 112, 122 stößt und deshalb nicht weiter in die Aussparung 11 eingeführt werden kann. Da die Ausdehnung der Federplatte 1a in der Klemmebene bzw. in radialer Richtung der ringförmigen Aussparung größer ist als die Ausdehnung des durch das Gehäuseteil definierten Innenraums wird die Platte 1a im drucklosen Ausgangszustand verbogen bzw. vorgespannt. Danach wird die Einlegeplatte auf die Federplatte gelegt.

Es hat sich aber gezeigt, dass die Platten 1a, 1b der Feder 1 bei der Montage in Abhängigkeit von der axialen Einpresskraft positioniert sind und somit nicht immer gleich in den Gehäuseteilen 3a, 3b axial positioniert sind. Die Federplatten 1a, 1b können verkippen, unterschiedlich tief in die Gehäuseteile eingebracht werden oder sich unterschiedlich stark verbiegen. Durch die Variation der Positionierung der Platten 1a, 1b innerhalb der Gehäuseteile ergibt sich durch deren maßgeblicher Bedeutung für die Öffnungs- und Schließfunktion der Klemmvorrichtungen 10 eine Variation dieser Funktionen, insbesondere eine Asymmetrie bei der Verteilung der Klemmkraft entlang der Klemmfläche bzw. des Umfangs der Öffnung innerhalb der Klemmebene, was nachteilig für eine effektive und nachhaltige Klemmwirkung und ein unversehrtes Objekt ist.

In den unteren Zeichnungen der Figuren 6A und 6B werden bevorzugte Ausführungsformen der erfindungsgemäßen Klemmvorrichtung 10 im Vergleich zu den Gehäuseteilen nach Figuren 5C, 5D dargestellt, wobei Letztere nochmals in den oberen Zeichnungen der Figuren 6A und 6B zum Vergleich dargestellt sind.

Bevorzugt umfasst das Gehäuseteil 3a, 3b eine ringförmige Aussparung 11, die eine erste Anlagefläche 101 des Gehäuseteils 3a, 3b und eine zweite Anlagefläche 102 des Gehäuseteils 3a, 3b definiert. Die Aussparung 11 dient dem Einklemmen einer der ringförmigen Federplatten 1a, 1b zwischen der ersten Anlagefläche 101 des Gehäuseteils 3a, 3b und der zweiten Anlagefläche 102 des Gehäuseteils 3a, 3b. Das Gehäuseteil 3a, 3b umfasst ferner ein Klemmelement 8 mit einer Klemmfläche 7, die ausgelegt ist, wenn die Federplatte 1a, 1b derart in der Aussparung 11 zwischen der ersten Anlagefläche 101 und der zweiten Anlagefläche 102 eingeklemmt ist, dass sich ein erstes Ende der Federplatte 1a, 1b an der ersten Anlagefläche 101 abstützt, sich die Federplatte 1a, 1b von der ersten Anlagefläche 101 bis zu der zweiten Anlagefläche 102 erstreckt, und ein zweites Ende der Federplatte 1a, 1b auf die zweite Anlagefläche 102 drückt, eine Klemm- und/oder Bremskraft auf ein zu klemmendes und/oder zu bremsendes Objekt 5 zu übertragen. Entsprechend der besonders bevorzugten Ausführungsformen umfasst das Gehäuseteil 3a, 3b der Fig. 6A, 6B im Unterschied zu Fig. 5B-5D ein erstes Einrastmittel 110 und ein zweites Einrastmittel 120, wobei, wenn die Federplatte 1a, 1b in der Aussparung 11 zwischen der ersten Anlagefläche 101 und der zweiten Anlagefläche 102 eingeklemmt ist, das erste Einrastmittel 110 ausgelegt ist, das erste Ende der Federplatte 1a, 1b an der ersten Anlagefläche 101 einzurasten und das zweite Einrastmittel 120 ausgelegt ist, das zweite Ende der Federplatte 1a, 1b an der zweiten Anlagefläche 102 einzurasten.

Wie in der unteren Zeichnung von Figur 6A dargestellt, wird als Teil des ersten Einrastmittels bevorzugt ein Vorsprung 111 auf der ersten Anlagefläche 101 bereitgestellt. Beim Einführen der Platte 1a entlang einer Richtung parallel zu der Hauptachse 9 in das Gehäuseteil 3a muss somit das erste Ende der Federplatte 1a zwar diesen Vorsprung 111 überwinden, was jedoch dazu führt, dass nach Überwindung dieses Vorsprungs 111 die Platte 1a zwischen dem Anschlag 112 und dem Vorsprung 111 in Richtung der Hauptachse 9 definiert angeordnet ist. Die Platte 1a rastet zwischen Anschlag 112 und Vorsprung 111 im Bereich der ersten Anlagefläche 101 ein und kann diese bevorzugt dort berühren. Der Vorsprung 111 kann stufen- oder rampenförmig sein oder eine andere Form aufweisen, die diese Funktion des Vorsprungs bereitstellt. Gleiches gilt analog für die im unteren Bild der Figur 6B dargestellten erfindungsgemäße zweiten Anlagefläche 102, auf der ebenfalls bevorzugt ein Vorsprung 121 gebildet wird, den das zweite Ende der Federplatte 1a beim Einführen entlang einer Richtung parallel zu Hauptachse 9 überwinden muss, bevor die Platte 1a zwischen dem Anschlag 122 und dem Vorsprung 121 auf definierte Art und Weise positioniert ist und dort im Bereich der zweiten Anlagefläche 102 einrastet. Das zweite Ende der Federplatte 1a kann die zweite Anlagefläche 102 bevorzugt während der Einrastung berühren. Der Vorsprung 121 kann stufen- oder rampenförmig sein oder eine andere Form aufweisen, die diese Funktion des Vorsprungs 121 bereitstellt.

Wie aus den Figuren 1A bis 6B ersichtlich, sind der erste Vorsprung 111 und der erste Anschlag weiter von dem zu klemmenden Objekt 5 entfernt, als der zweite Vorsprung 121 und der zweite Anschlag 122, und zwar unabhängig davon, ob die Klemmkraft nach innen (Fig. 1A, 2A) oder nach außen (Fig. 1B, 2B) wirkt. Erster Vorsprung 111 und erster Anschlag 112 können dem Klemmelement 8 im Gehäuseteil 3a, 3b gegenüber angeordnet sein, während zweiter Vorsprung 121 und zweiter Anschlag 122 im Bereich des Klemmelements 8 angeordnet sind bzw. Teil des Klemmelements 8 sein können. Der erste Anschlag 112 kann eine längere Ausdehnung in radialer Richtung R der ringförmigen Aussparung 11 haben als der erste Vorsprung 111 (Fig. 6A, 5B). Der erste Vorsprung 111 kann um 0,025 mm bis 0,15 mm, bevorzugt 0,05 mm bis 0,1 mm, besonders bevorzugt um 0,1 mm, in einer radialen Richtung R der ringförmigen Aussparung 11 von der bzw. in Bezug auf die erste(n) Anlagefläche 101 (z.B. in die Aussparung 11 hinein) vor- bzw. abstehen.

Der zweite Anschlag 122 kann eine längere Ausdehnung in radialer Richtung R der ringförmigen Aussparung 11 haben als der zweite Vorsprung 121 (Fig. 6B, 5B). Der zweite Vorsprung 121 kann um 0,025 mm bis 0,15 mm, bevorzugt 0,05 mm bis 0,1 mm, besonders bevorzugt um 0,05 mm, in einer radialen Richtung R der ringförmigen Aussparung 11 von der bzw. in Bezug auf die zweite(n) Anlagefläche 102 (z.B. in die Aussparung 11 hinein) vor- bzw. abstehen.

Die ringförmige Aussparung 11 kann eine ringförmige Öffnung 12 im Gehäuseteil 3a, 3b (in der Klemmebene) definieren, wobei die ringförmige Öffnung 12 zwischen einem ersten ringförmigen Rand 12a des Gehäuseteils und einem zweiten ringförmigen Rand 12b des Gehäuseteils gebildet ist, und wobei die ringförmige Öffnung 12 der Einführung der Federplatte 1a in die Aussparung 11 dient. Der erste Vorsprung 111 kann zwischen dem ersten ringförmigen Rand 12a und der ersten Anlagefläche 101 an einer Innenseite des Gehäuseteils 3a im Bereich der Aussparung 11 angeordnet sein und in die Aussparung 11 hineinragen. Der zweite Vorsprung 121 kann zwischen dem zweiten ringförmigen Rand 12b und der zweiten Anlagefläche 102 an einer Innenseite des Gehäuseteils im Bereich der Aussparung 11 angeordnet sein und in die Aussparung 11 hineinragen (Fig. 6A, 6B).

Vorsprung 111 und Anschlag 112 können eine Nut im Gehäuseteil 3a definieren, in die das erste Ende der Federplatte 1a einrasten kann, wobei die erste Anlagefläche 101 einen Teil der Nut bilden kann. Vorsprung 121 und Anschlag 122 können eine Nut im Gehäuseteil 3a definieren, in die das zweite Ende der Federplatte 1a einrasten kann, wobei die zweite Anlagefläche 102 einen Teil der Nut bilden kann.

Durch die Schaffung der Einrastmittel 110, 120, bevorzugt mittels Vorsprüngen 111, 121 ggf. in Kombination mit den optionalen Anschlägen 112, 122, in den Bereichen der beiden Anlageflächen 101, 102 wird für die Federplatte 1a, 1b eine (insbesondere axiale) Zwangsposition geschaffen. Durch diese Zwangspositionierung wird die Federplatte 1a, 1b stabil gelagert, insbesondere in Richtung parallel zur Hauptachse 9 der Klemmvorrichtung 10 axial definiert positioniert, und die Position der Federplatte 1a, 1b ist deshalb nicht mehr maßgeblich in Abhängigkeit von der axialen Einpresskraft innerhalb der Gehäuseteile 3a, 3b positioniert. Durch die (axial) eindeutig definierte Lage jeder der Federplatten 1a, 1b der Feder 1 wird auch die Krümmung der Federplatten 1a, 1b wohldefiniert und wie gewünscht im drucklosen Zustand ausgestaltet.

Durch die Einrastmittel 110, 120 können die beiden Federbleche 1a, 1b in der Klemmvorrichtung 10 genauer mit einem wohl definierten gleichmäßigen Abstand zueinander innerhalb des Gehäuses 3 angeordnet werden. Die Federplatten 1a, 1b können durch die Einrastmittel 110, 120 mit ihren Längsachsen parallel zur Klemmebene positioniert werden. Der durch die Einrastmittel 110, 120 erzielte symmetrische Funktionsaufbau erzeugt symmetrische Spannungen der Feder 1 über den gesamten Umfang der Öffnung 14 und führt somit zu einer sehr effektiven Klemmkraftverteilung gleichmäßig um das Objekt 5 herum in der Klemmebene.

Die Öffnungs- und Schließfunktionen können durch die Einrastmittel 110, 120 somit über den Umfang der Öffnung 14 symmetrisch und verlässlicher erfolgen. Mögliche ungewollte radiale oder axiale Bewegungen des Gehäuses 3 führen somit nicht zu ungewollten axialen oder radialen geometrischen Verlagerungen an der Klemmfläche 7.

Zusätzlich zu der Schaffung der beschriebenen axialen Zwangsposition für die Federplatten haben die Einrastmittel auch die vorteilhafte Wirkung, dass durch die wohldefinierte axiale Positionierung der Federplatte, auch die axiale Positionierung der Einlegeplatte noch genauer axial definiert ist, da die Einlegeplatte auf der Federplatte ruht bzw. die axiale Positionierung der Einlegplatte auch durch die axiale Positionierung der Federplatte bestimmt wird. Dadurch kann die Verdrängung des Volumens im Innenraum durch die Einlegeplatte noch genauer axial definiert, entlang der Federplatten gleichmäßig, und axial symmetrisch ausgestaltet werden, was sich vorteilhaft auf die gewünschte unveränderte, gleichmäßige und axial symmetrische Dynamik einer jeden Federplatte auswirkt.

Die Erfinder haben herausgefunden, dass neben der Einlegeplatte 100 auch durch diese Einrastmittel 110, 120, insbesondere durch die Vorsprünge 111, 121, neben der axial wohldefinierten und symmetrischen Positionierung innerhalb des Gehäuses zusätzlich auch eine verbesserte Dichtwirkung zwischen den Federplatten 1a, 1b und zwischen eines jeden der beiden Gehäuseteile 3a, 3b mit der dazugehörigen Platte 1a, 1b der Feder 1 erzielt wird. Diese verbesserten Dichtungswirkungen durch Einlegeplatte und Einrastmittel sind insbesondere bei der zusätzlichen Beaufschlagung mit Druckluft in den inneren und äußeren Druckräumen 2, 4 zur Überführung der Klemmvorrichtungen in einen anderen der beiden beschriebenen Zustände von besonderem Vorteil. Die Einlegeplatte 100 und die Einrastmittel 110, 120, insbesondere die Vorsprünge 111, 121, bewirken einen im Hinblick auf die Dichtwirkung stark verbesserten Kontakt zwischen der Gummierungen der Platten 1a, 1b und der Gummierung einer jeden Platte 1a, 1b mit dem jeweiligen Gehäuseteil 3a, 3b.

Die Erfinder haben weitere zusätzliche Vorteile durch die Schaffung der Einrastmittel 110, 120, insbesondere der Vorsprünge 111, 121, identifiziert. So erlaubt die definierte Lage der gummierten Federplatten 1a, 1b über die Anpassung der Gummidicken um die Federplatten gezielte Hubbegrenzungen der Platten als Schutz vor Fehlanwendungen (z.B. Nulldurchgang) mit zu hohem Betriebsdruck (insb. bei Booster) einzubauen und ebenso wird dadurch der Bedarf (Volumen) an Druckmedium reduziert und als Folge die Öffnungs- und Schließgeschwindigkeiten der Klemmvorrichtung 10 erhöht. Auch durch die Einlegeplatte 100 können diese Vorteile erzielt werden.

Die Vorteile der Einrastmittel müssen jedoch nicht unbedingt realisiert werden, um die Vorteile der Einlegeplatte zu realisieren. Unabhängig davon, ob in den Gehäuseteilen die besonders bevorzugten Einrastmittel verwendet werden oder nicht, weist die erfindungsgemäße Klemm- und/oder Bremsvorrichtung eine Einlegeplatte 100 auf.

Figur 7 zeigt eine bevorzugte Ausführungsform der erfindungsgemäßen Klemm- und/oder Bremsvorrichtung mit einem Gehäuseteils gemäß Figur 6B, also mit optionalem Einrastmittel 120 umfassend den optionalen Vorsprung 121.

Die Figur zeigt ein Gehäuseteil 3a bzw. 3b mit der dazugehörigen Federplatte 1a bzw. 1b und einer hier dargestellten Einlegeplatte 100 die zwischen dieser Federplatte und der Federplatte eines dem in Figur 7 gezeigten Gehäuseteil gegenüberliegenden weiteren Gehäuseteils angeordnet ist.

Wird durch Belüften oder Beaufschlagung mit Druckmedium im zweiten (inneren) Druckraum 2 eine Kraft F₁ zum Verbiegen der Federplatte 1a bzw. 1b bewirkt, so führt diese Verbiegung der Federplatte zu einer Federkraft F₂ mit der ein Ende der Federplatte gegen die zweite Anlagefläche 102 drückt. In der hier beispielhaft gezeigten bevorzugten Ausführung drückt die Federplatte gegen die zweite Anlagefläche 102 im Bereich zwischen dem zweiten Anschlag 122, der auch Teil des Einrastmittel 120 sein kann, und dem ersten Vorsprung 121, der auch Teil des Einrastmittel 120 sein kann. Sowohl Anschlag, also Vorsprung und Einrastmittel sind jedoch optional.

Die auf die zweite Anlagefläche 102 wirkende Federkraft F₂ sorgt für eine elastische Verformung des Klemmelements 8. Das Klemmelement 8 kann derart elastisch sein, dass das Klemmelement einen Hebelarm 8a bildet, der ausgelegt ist, sich durch das Drücken der Federplatte 1a bzw. 1b auf die zweite Anlagefläche 102 des Gehäuseteils 3a bzw. 3b mit Federkraft F₂ elastisch zu verformen und dadurch um einen Drehpunkt D derart zu drehen (vgl. gebogener Pfeil in Figur 7), dass die Klemmfläche 7 des Klemmelements 8 die Klemm- und/oder Bremskraft F₃ auf das zu klemmende und/oder zu bremsende Objekt 5 überträgt. Der Drehpunkt D kann im Bereich des Gehäuseteils 3a, 3b an einem dem Ende 8b gegenüberliegenden Ende des Hebelarms 8a sein, beispielsweise in dem mit D gekennzeichneten Dreieck in Figur 7. Das Einwirken der Federkraft F₂ auf die zweite Anlagefläche 102, die hier der Klemmfläche 7 abgewandt und gegenüberliegend ist, bewirkt die Drehung des Hebelarms 8a um den Drehpunkt D derart, dass das Ende 8b des Hebelarms 8a sich zu dem zu beklemmenden Objekt 5 hin bewegt. Das Ende 8b bewegt sich dabei um ein radialen Hub H₂ auf das zu klemmende Objekt hin und die Klemmfläche 7 berührt das zu klemmende Objekt. Somit wird durch die Verbiege-Kraft F₁ eine Federkraft F₂ bewirkt, die wiederum eine Klemmkraft F₃ bewirkt, die über die Klemmfläche 7 im Bereich des Endes 8b des Hebelarms 8a des Klemmelements 8 auf das zu klemmende Objekt 5 wirkt und dieses klemmt. Die Vorrichtung wird so in den geschlossenen Zustand überführt.

Die Einlegeplatte 100 erlaubt es hierbei die Länge, L₂, des Hebelarms 8a länger auszugestalten als bei konventionellen Klemmvorrichtungen, die eine Länge L₁ aufweisen. Durch eine größere Länge L₂ wird ein größerer radialer Hub H₂ erzielt als der kommerzielle radiale Hub H₁ aus dem Stand der Technik. Dies führt dazu, dass die oben beschriebenen Vorteile des längeren Hebelarms 8a und des größeren radialen Hubes H₂ erzielt werden können, ohne, dass die Vergrößerung des Volumens innerhalb der Klemmvorrichtung 10 im Bereich des Innenraums 13 zu einer Verringerung der Schließ- und Öffnungsgeschwindigkeit der Klemmvorrichtung 10 führt. Die Dynamik der Federplatten 1a, 1b kann somit wie gewünscht unverändert bleiben. Dabei gilt (in etwa) L₂/L₁ = H₂/H₁. Das Verhältnis L₂/L₁ bzw. H₂/H₁ kann mindestens 1,3, mindestens 1,4, mindestens 1,5, oder mindestens 1,7 betragen, oder bevorzugt in einem Bereich sein von 1,3 bis 2,2 oder 1,4 bis 2,2 oder 1,4 bis 2,0 oder 1,4 bis 1,7 oder 1,3 bis 1,8.

Der Abstand A₂ zwischen dem zweiten Anschlag 122 und dem zweiten ringförmigen Rand 12b bei einer Vorrichtung 10 mit Einlegeplatte 100 kann wie beschrieben bevorzugt 3 mm bis 6 mm, 4 mm bis 5 mm, oder etwa 4,7 mm betragen, was mehr ist als der entsprechende Abstand A₁ bei konventionellen Vorrichtungen 10 ohne Einlegeplatte.

Vorzugsweise kann der zweite Vorsprung 121, oder die Stufe 121 oder die Rampe 121 des zweiten Vorsprungs, wie beschrieben in einem Abstand V₂ von 2 mm bis 6 mm, 3 mm bis 5 mm, 3 mm bis 4 mm, oder etwa 3,2 mm von dem zweiten ringförmigen Rand 12b auf der zweiten Anlagefläche 102 des Gehäuseteils im Bereich der Aussparung 11 angeordnet sein, wobei V₂ größer ist als der entsprechende Abstand V₁ bei konventionellen Vorrichtungen 10 ohne Einlegeplatte.

Durch die in Figur 7 im Rahmen einer bevorzugten erfindungsgemäßen Ausführungsform beschriebenen Kombination von Einlegeplatte 100 und Hebelarm 8a wird Verschleiß reduziert und gleichzeitig der Klemmvorgang wirkungsvoller, ohne die Dynamik der Federplatten negativ zu beeinträchtigen.

In der Beschreibung und in den Figuren sind bevorzugte Ausführungsformen der durch die folgenden Ansprüche beanspruchten Erfindung beschrieben. Die in der vorstehenden Beschreibung, den Ansprüchen und den Zeichnungen offenbarten optionalen Merkmale können sowohl einzeln als auch in beliebiger Kombination für die Ausführung der hier gemäß der beiliegenden Ansprüche beanspruchten Erfindung in ihren verschiedenen Ausgestaltungen Verwendung finden.

## Patentansprüche

1. Eine Klemm- und/oder Bremsvorrichtung (10) zum Klemmen und/oder Bremsen eines zu klemmenden und/oder bremsenden Objekts (5), umfassend:
ein Gehäuse (3) umfassend ein erstes Gehäuseteil (3a) und ein zweites Gehäuseteil (3b), wobei jedes der Gehäuseteile (3a, 3b) eine ringförmige Aussparung (11) umfasst, die eine erste Anlagefläche (101) des Gehäuseteils (3a, 3b) und eine zweite Anlagefläche (102) des Gehäuseteils (3a, 3b) definiert, und wobei die beiden Gehäuseteile (3a, 3b) derart zueinander angeordnet und miteinander befestigt sind, dass die Aussparungen (11) der ersten und zweiten Gehäuseteile (3a, 3b) zusammen einen Innenraum (13) innerhalb des Gehäuses (3) bilden;
eine in dem Innenraum (13) angeordnete Feder (1) umfassend eine erste ringförmige Federplatte (1a) und eine zweite ringförmige Federplatte (1b), wobei die erste ringförmige Federplatte (1a) in der ringförmigen Aussparung (11) des ersten Gehäuseteils (3a) zwischen der ersten Anlagefläche (101) und der zweiten Anlagefläche (102) des ersten Gehäuseteils (3A) eingeklemmt ist, und wobei die zweite ringförmige Federplatte (1b) in der ringförmigen Aussparung (11) des zweiten Gehäuseteils (3a) zwischen der ersten Anlagefläche (101) und der zweiten Anlagefläche (102) des zweiten Gehäuseteils (3A) eingeklemmt ist;
mindestens ein Klemmelement (8), wobei jedes Klemmelement (8) eine Klemmfläche (7) aufweist, die ausgelegt ist, wenn sich ein erstes Ende einer der Federplatten (1a, 1b) an der ersten Anlagefläche (101) eines der Gehäuseteile (3a, 3b) abstützt und ein zweites Ende der einen der Federplatten (1a, 1b) auf die zweite Anlagefläche (102) des einen der Gehäuseteile (3a, 3b) drückt, eine Klemm- und/oder Bremskraft auf das zu klemmende und/oder zu bremsende Objekt (5) zu übertragen;
wobei die Federplatten (1a, 1b) derart innerhalb des Innenraums (13) angeordnet sind, dass in dem Innenraum (13) mindestens ein Druckraum (2, 4) gebildet wird, der zumindest teilweise durch die Federplatten (1a, 1b) begrenzt wird, wobei der Druckraum (2, 4) be- oder entlüftbar ist und mit Überdruck eines dem Gehäuse (3) zuführbaren Druckmediums beaufschlagbar ist, wobei die Federplatten (1a, 1b) derart relativ zu den mindestens einen Druckraum (2, 4) angeordnet sind, dass durch Be- oder Entlüften des Druckraums (2, 4) oder Beaufschlagung des Druckraum (2, 4) mit Überdruck, eine Biegung mindestens einer der Federplatten (1a, 1b) veränderbar ist und dadurch die Klemm- und/oder Bremsvorrichtung (10) zwischen einem geöffneten Zustand, in dem die mindestens eine Klemmfläche (7) von dem Objekt (5) beabstandet ist, und einem geschlossenen Zustand, in dem ein oder mehrere der mindestens einen Klemmfläche (7) eine Klemm- und/oder Bremskraft auf das Objekt (5) übertragen, wechselt;
**dadurch gekennzeichnet, dass**
die Klemm- und/oder Bremsvorrichtung (10) ferner mindestens eine Einlegeplatte (100) umfasst, die zwischen der ersten Federplatte (1a) und der zweiten Federplatte (1b) in dem Innenraum (13) angeordnet ist.

2. Die Klemm- und/oder Bremsvorrichtung (10) nach Anspruch 1, **dadurch gekennzeichnet, dass** sich die Einlegeplatte (100) in jedem der Gehäuseteile (3a, 3b) zwischen der jeweiligen ersten Anlagefläche (101) und der jeweiligen zweiten Anlagefläche (102) erstreckt.

3. Die Klemm- und/oder Bremsvorrichtung (10) nach Anspruch 1 oder 2, **dadurch gekennzeichnet, dass** die Einlegeplatte ringförmig ist.

4. Die Klemm- und/oder Bremsvorrichtung (10) nach irgendeinem der vorangehenden Ansprüche, **dadurch gekennzeichnet, dass** die Einlegeplatte (100) steif ist.

5. Die Klemm- und/oder Bremsvorrichtung (10) nach irgendeinem der vorangehenden Ansprüche, **dadurch gekennzeichnet, dass** das Klemmelement (8) an einer ersten Seitenfläche die Klemmfläche (7) aufweist und an einer zweiten Seitenfläche, die vorzugsweise der ersten Seitenfläche abgewandt und/oder gegenüberliegend ist, die zweite Anlagefläche (102) eines der Gehäuseteile (3a, 3b) aufweist.

6. Die Klemm- und/oder Bremsvorrichtung (10) nach irgendeinem der vorangehenden Ansprüche, **dadurch gekennzeichnet, dass** das Klemmelement (8) derart elastisch ist, dass das Klemmelement (8) einen Hebelarm (8a) bildet, der ausgelegt ist, sich durch das Drücken mindestens einer der Federplatten (1a, 1b) auf die zweite Anlagefläche (102) mindestens einer der Gehäuseteile (3a, 3b) elastisch zu verformen und dadurch um einen Drehpunkt (D) derart zu drehen, dass die Klemmfläche (7) des Klemmelements (8) die Klemm- und/oder Bremskraft auf das zu klemmende und/oder zu bremsende Objekt (5) überträgt.

7. Die Klemm- und/oder Bremsvorrichtung (10) nach Anspruch 6, **dadurch gekennzeichnet, dass** der Hebelarm (8a) derart ausgelegt ist, dass bei der Drehung des Hebelarms (8a) um den Drehpunkt (D) ein Ende (8b) des Hebelarms (8a) um einen radialen Hub (H2) näher an das Objekt (5) bewegt wird.

8. Die Klemm- und/oder Bremsvorrichtung (10) nach Anspruch 7, **dadurch gekennzeichnet, dass** die Länge (L₂) des Hebelarms (8a) von dem Drehpunkt (D) zu dem Ende (8b) des Hebelarms (8a) derart gewählt ist, dass der radiale Hub (H₂) mindestens 0,13 mm, bevorzugt mindestens 0,15 mm, besonders bevorzugt mindestens 0,17 mm beträgt.

9. Die Klemm- und/oder Bremsvorrichtung (10) nach Anspruch 7 oder 8, **dadurch gekennzeichnet, dass** die Länge (L₂) des Hebelarms (8a) von dem Drehpunkt (D) bis zu dem Ende (8b) des Hebelarms (8a) 4 mm bis 8 mm, 5 mm bis 7 mm, 6 mm bis 7 mm oder etwa 6,6 mm beträgt.

10. Das Klemm- und/oder Bremsvorrichtung (10) nach irgendeinem der vorangehenden Ansprüche, **dadurch gekennzeichnet, dass** die ringförmige Aussparung (11) jedes Gehäuseteils (3a, 3b) eine ringförmige Öffnung (12) in dem Gehäuseteil (3a, 3b) definiert, wobei die ringförmige Öffnung (12) zwischen einem ersten ringförmigen Rand (12a) des Gehäuseteils (3a, 3b) und einem zweiten ringförmigen Rand (12b) des Gehäuseteils (3a, 3b) gebildet ist,
wobei die erste Anlagefläche (101) jedes Gehäuseteils (3a, 3b) durch den ersten ringförmigen Rand (12a) des Gehäuseteils (3a, 3b) und einen ersten Anschlag (112) des Gehäuseteils (3a, 3b) derart begrenzt wird, dass bei Einbringen einer der Federplatten (1a, 1b) von Außen an dem ersten ringförmigen Rand (12a) vorbei in die Aussparung (11) des Gehäuseteils (3a, 3b) hinein, der erste Anschlag (112) ein Hindernis gegen ein tieferes Einbringen der Federplatte (1a, 1b) in die Aussparung (11) hinein bildet, vorzugsweise wobei der Abstand (A₂) zwischen dem ersten Anschlag (112) und dem ersten ringförmigen Rand (12a) 3 mm bis 6 mm, 4 mm bis 5 mm, oder etwa 4,7 mm beträgt,
und/oder
wobei die zweite Anlagefläche (101) jedes Gehäuseteils (3a, 3b) durch den zweiten ringförmigen Rand (12b) des Gehäuseteils (3a, 3b) und einen zweiten Anschlag (122) des Gehäuseteils (3a, 3b) derart begrenzt wird, dass bei Einbringen einer der Federplatten (1a, 1b) von Außen an dem zweiten ringförmigen Rand (12b) vorbei in die Aussparung (11) des Gehäuseteils (3a, 3b) hinein, der zweite Anschlag (122) ein Hindernis gegen ein tieferes Einbringen der Federplatte (1a, 1b) in die Aussparung (11) hinein bildet, vorzugsweise wobei der Abstand (A₂) zwischen dem zweiten Anschlag (122) und dem zweiten ringförmigen Rand (12b) 3 mm bis 6 mm, 4 mm bis 5 mm, oder etwa 4,7 mm beträgt.

11. Die Klemm- und/oder Bremsvorrichtung (10) nach irgendeinem der vorangehenden Ansprüche, **dadurch gekennzeichnet, dass** jedes der Gehäuseteile (3a, 3b) ein erstes Einrastmittel (110) und ein zweites Einrastmittel (120) umfasst, wobei die betreffende Federplatte (1a, 1b) in der Aussparung (11) des Gehäuseteils (3a, 3b) derart zwischen der ersten Anlagefläche (101) und der zweiten Anlagefläche (102) des Gehäuseteils eingeklemmt ist, dass das erste Einrastmittel (110) das erste Ende der betreffenden Federplatte (1a, 1b) an der ersten Anlagefläche (101) einrastet und das zweite Einrastmittel (120) das zweite Ende der betreffenden Federplatte (1a, 1b) an der zweiten Anlagefläche (102) einrastet.

12. Die Klemm- und/oder Bremsvorrichtung (10) nach Anspruch 11, **dadurch gekennzeichnet, dass** das erste Einrastmittel (110) einen ersten Vorsprung (111) der ersten Anlagefläche (101) und den ersten Anschlag (112) umfasst, die zusammen das erste Ende der betreffenden Federplatte (1a, 1b) zwischen dem ersten Vorsprung (111) und dem ersten Anschlag (112) im Bereich der ersten Anlagefläche (101) einrasten, und/oder, dass das zweite Einrastmittel (120) einen zweiten Vorsprung (121) der zweiten Anlagefläche (102) und den zweiten Anschlag (122) umfasst, die zusammen das zweite Ende der betreffenden Federplatte (1a, 1b) zwischen dem zweiten Vorsprung (121) und dem zweiten Anschlag (122) im Bereich der zweiten Anlagefläche (102) einrasten.

13. Die Klemm- und/oder Bremsvorrichtung (10) nach Anspruch 12, **dadurch gekennzeichnet, dass** der erste Vorsprungs (111) eine Stufe oder Rampe umfasst und/oder, dass der zweite Vorsprung (121) eine Stufe oder Rampe umfasst.

14. Die Klemm- und/oder Bremsvorrichtung (10) nach Anspruch 12 oder 13, **dadurch gekennzeichnet, dass** der erste Vorsprung (111) zwischen dem ersten ringförmigen Rand (12a) und dem ersten Anschlag (112) auf der ersten Anlagefläche (101) des jeweiligen Gehäuseteils (3a, 3b) im Bereich der Aussparung (11) angeordnet ist, vorzugsweise wobei der erste Vorsprung (111), oder die Stufe oder die Rampe des ersten Vorsprungs, in einem Abstand (V₂) von 2 mm bis 6 mm, 3 mm bis 5 mm, 3 mm bis 4 mm, oder etwa 3,2 mm von dem ersten ringförmigen Rand (12a) auf der ersten Anlagefläche (101) des Gehäuseteils (3a, 3b) im Bereich der Aussparung (11) angeordnet ist,
und/oder,
dass der zweite Vorsprung (121) zwischen dem zweiten ringförmigen Rand (12b) und dem zweiten Anschlag (122) auf der zweiten Anlagefläche (102) des jeweiligen Gehäuseteils (3a, 3b) im Bereich der Aussparung (11) angeordnet ist, vorzugsweise wobei der zweite Vorsprung (121), oder die Stufe oder die Rampe des zweiten Vorsprungs, in einem Abstand (V₂) von 2 mm bis 6 mm, 3 mm bis 5 mm, 3 mm bis 4 mm, oder etwa 3,2 mm von dem zweiten ringförmigen Rand (12b) auf der zweiten Anlagefläche (102) des Gehäuseteils (3a, 3b) im Bereich der Aussparung (11) angeordnet ist.

15. Die Klemm- und/oder Bremsvorrichtung (10) nach irgendeinem der vorangehenden Ansprüche, **dadurch gekennzeichnet, dass** der mindestens eine Druckraum einen ersten Druckraum (4) umfasst, der außerhalb der Feder (1) zwischen mindestens einer der Federplatten (1a, 1b) und dem Gehäuse (3) angeordnet ist.

16. Die Klemm- und/oder Bremsvorrichtung (10) nach Anspruch 15, **dadurch gekennzeichnet, dass** die erste Federplatte (1a) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der ersten Federplatte (1a) an der ersten Anlagefläche (101) des ersten Gehäuseteils (3a), mit dem zweiten Ende der ersten Federplatte (1a) auf die zweite Anlagefläche (102) des ersten Gehäuseteils (3a) derart zu drücken, dass dadurch eine Übertragung einer Klemm- und/oder Bremskraft von der Klemmfläche (7) des Klemmelements (8) des ersten Gehäuseteils (3a) auf das zu klemmende und/oder bremsende Objekt (5) bewirkt wird und die Vorrichtung (10) von dem geöffneten Zustand in den geschlossenen Zustand wechselt,
und/oder,
dass die zweite Federplatte (1b) ausgelegt ist, durch das Belüften des ersten Druckraums (4) oder durch das Beaufschlagen des ersten Druckraum (4) mit Überdruck, ihre Biegung zu reduzieren um, bei Aufstützen des ersten Endes der zweiten Federplatte (1b) an der ersten Anlagefläche (101) des zweiten Gehäuseteils (3b), mit dem zweiten Ende der zweiten Federplatte (1b) auf die zweite Anlagefläche (102) des zweiten Gehäuseteils (3a) derart zu drücken, dass dadurch eine Übertragung einer Klemm- und/oder Bremskraft von der Klemmfläche (7) des Klemmelements (8) des zweiten Gehäuseteils (3a) auf das zu klemmende und/oder bremsende Objekt (5) bewirkt wird und die Vorrichtung (10) von dem geöffneten Zustand in den geschlossenen Zustand wechselt.

17. Die Klemm- und/oder Bremsvorrichtung (10) nach irgendeinen der Ansprüche 15 bis 16, **dadurch gekennzeichnet, dass** die Vorrichtung (10) derart ausgelegt ist, dass durch das Belüften des ersten Druckraums (4) oder durch das Beaufschlagendes ersten Druckraums (4) mit Überdruck, sich die erste Anlagefläche (101) und die zweite Anlagefläche (102) zumindest einer der beiden Gehäuseteile (3a, 3b) voneinander wegbewegen und/oder sich die Biegung mindestens einer der Federplatten (1a, 1b) verringert, und dadurch die Vorrichtung (10) von dem geöffneten Zustand in den geschlossenen Zustand wechselt.

18. Die Klemm- und/oder Bremsvorrichtung (10) nach irgendeinem der vorangehenden Ansprüche, **dadurch gekennzeichnet, dass** der mindestens eine Druckraum ein oder mehrere zweite Druckräume (2) umfasst, wobei die ein oder mehreren zweiten Druckräume (2) innerhalb der Feder (1) zwischen jeder der beiden Federplatten (1a, 1b) und der Einlegeplatte (100) angeordnet sind,

19. Die Klemm- und/oder Bremsvorrichtung (10) nach Anspruch 18, wobei die Vorrichtung (10) derart ausgelegt ist, dass durch das Belüften der ein oder mehrere zweite Druckräume (2) oder durch das Beaufschlagen der ein oder mehreren zweiten Druckräume (2) mit Überdruck, sich die erste Anlagefläche (101) und die zweite Anlagefläche (102) zumindest einer der beiden Gehäuseteile (3a, 3b) aufeinander zu bewegen und/oder sich die Biegung mindestens einer der Federplatten (1a, 1b) vergrößert, und dadurch die Vorrichtung (10) von dem geschlossenen Zustand in den geöffneten Zustand wechselt.

## Claims

1. A clamping and/or braking device (10) for clamping and/or braking an object (5) to be clamped and/or braked, comprising:
a housing (3) comprising a first housing part (3a) and a second housing part (3b), wherein each of the housing parts (3a, 3b) comprises an annular recess (11) defining a first contact surface (101) of the housing part (3a, 3b) and a second contact surface (102) of the housing part (3a, 3b), and wherein the two housing parts (3a, 3b) are arranged relative to each other and fastened to each other such that the recesses (11) of the first and second housing parts (3a, 3b) together form an inner space (13) within the housing (3);
a spring (1) arranged in the inner space (13) comprising a first annular spring plate (1a) and a second annular spring plate (1b), wherein the first annular spring plate (1a) is clamped in the annular recess (11) of the first housing part (3A) between the first contact surface (101) and the second contact surface (102) of the first housing part (3a), and wherein the second annular spring plate (1b) is clamped in the annular recess (11) of the second housing part (3a) between the first contact surface (101) and the second contact surface (102) of the second housing part (3A);
at least one clamping element (8), wherein each clamping element (8) has a clamping surface (7) which is designed to transmit a clamping and/or braking force to the object (5) to be clamped and/or braked when a first end of one of the spring plates (1a, 1b) is supported on the first contact surface (101) of one of the housing parts (3a, 3b) and a second end of the one of the spring plates (1a, 1b) presses on the second contact surface (102) of the one of the housing parts (3a, 3b);
wherein the spring plates (1a, 1b) are arranged within the inner space (13) in such a way that at least one pressure space (2, 4) is formed in the inner space (13), which pressure space is at least partially delimited by the spring plates (1a, 1b), wherein the pressure space (2, 4) can be aerated or deaerated and can be acted on by positive pressure of a pressure medium which is suppliable to the housing (3), wherein the spring plates (1a, 1b) are arranged relative to the at least one pressure space (2, 4) in such a way that by aerating or deaerating the pressure space (2, 4) or acting on the pressure space (2, 4) with positive pressure, a bending of at least one of the spring plates (1a, 1b) is changeable and thereby the device (10) changes between an open state, in which the object (5) is spaced apart from the clamping surfaces (7), and a closed state, in which one or more of the clamping surfaces (7) transmit a clamping and/or braking force to the object (5);
**characterised in that**
the clamping and/or braking device (10) further comprises at least one insert plate (100) which is arranged between the first spring plate (1a) and the second spring plate (1b) in the inner space (13).

2. The clamping and/or braking device (10) according to claim 1, **characterised in that** the insert plate (100) extends in each of the housing parts (3a, 3b) between the respective first contact surface (101) and the respective second contact surface (102).

3. The clamping and/or braking device (10) according to claim 1 or 2, **characterised in that** the insert plate is annular.

4. The clamping and/or braking device (10) according to any one of the preceding claims, **characterised in that** the insert plate (100) is rigid.

5. The clamping and/or braking device (10) according to any one of the preceding claims, **characterised in that** the clamping element (8) has the clamping surface (7) on a first side surface and the second contact surface (102) of one of the housing parts (3a, 3b) on a second side surface which is preferably facing away from and/or opposite the first side surface.

6. The clamping and/or braking device (10) according to any one of the preceding claims, **characterised in that** the clamping element (8) is elastic such that the clamping element (8) forms a lever arm (8a) which is designed to deform elastically by pressing at least one of the spring plates (1a, 1b) on the second contact surface (102) of at least one of the housing parts (3a, 3b) and thereby to rotate about a pivot point (D) such that the clamping surface (7) of the clamping element (8) transmits the clamping and/or braking force to the object (5) to be clamped and/or braked.

7. The clamping and/or braking device (10) according to claim 6, **characterised in that** the lever arm (8a) is designed such that during the rotation of the lever arm (8a) about the pivot point (D) an end (8b) of the lever arm (8a) is moved closer to the object (5) by a radial stroke (H2).

8. The clamping and/or braking device (10) according to claim 7, **characterised in that** the length (L₂) of the lever arm (8a) from the pivot point (D) to the end (8b) of the lever arm (8a) is chosen such that the radial stroke (H₂) is at least 0.13 mm, preferably at least 0.15 mm, particularly preferably at least 0.17 mm.

9. The clamping and/or braking device (10) according to claim 7 or 8, **characterised in that** the length (L₂) of the lever arm (8a) from the pivot point (D) to the end (8b) of the lever arm (8a) is 4 mm to 8 mm, 5 mm to 7 mm, 6 mm to 7 mm or about 6.6 mm.

10. The clamping and/or braking device (10) according to any one of the preceding claims, **characterised in that** the annular recess (11) of each housing part (3a, 3b) defines an annular opening (12) in the housing part (3a, 3b), wherein the annular opening (12) is formed between a first annular edge (12a) of the housing part (3a, 3b) and a second annular edge (12b) of the housing part (3a, 3b),
wherein the first contact surface (101) of each housing part (3a, 3b) is delimited by the first annular edge (12a) of the housing part (3a, 3b) and a first stop (112) of the housing part (3a, 3b) such that upon insertion of one of the spring plates (1a, 1b) from the outside past the first annular edge (12a) into the recess (11) of the housing part (3a, 3b), the first stop (112) forms an obstacle against a deeper insertion of the spring plate (1a, 1b) into the recess (11), preferably wherein the distance (A₂) between the first stop (112) and the first annular edge (12a) is 3 mm to 6 mm, 4 mm to 5 mm, or about 4.7 mm,
and/or
wherein the second contact surface (101) of each housing part (3a, 3b) is delimited by the second annular edge (12b) of the housing part (3a, 3b) and a second stop (122) of the housing part (3a, 3b) such that upon insertion of one of the spring plates (1a, 1b) from the outside past the second annular edge (12b) into the recess (11) of the housing part (3a, 3b), the second stop (122) forms an obstacle against a deeper insertion of the spring plate (1a, 1b) into the recess (11), preferably wherein the distance (A₂) between the second stop (122) and the second annular edge (12b) is 3 mm to 6 mm, 4 mm to 5 mm, or about 4.7 mm.

11. The clamping and/or braking device (10) according to any one of the preceding claims, **characterised in that** each of the housing parts (3a, 3b) comprises a first latching means (110) and a second latching means (120), wherein the respective spring plate (1a, 1b) is clamped in the recess (11) of the housing part (3a, 3b) between the first contact surface (101) and the second contact surface (102) of the housing part such that the first latching means (110) latches the first end of the respective spring plate (1a, 1b) to the first contact surface (101) and the second latching means (120) latches the second end of the respective spring plate (1a, 1b) to the second contact surface (102).

12. The clamping and/or braking device (10) according to claim 11, **characterised in that** the first latching means (110) comprises a first projection (111) of the first contact surface (101) and the first stop (112), which together latch the first end of the respective spring plate (1a, 1b) between the first projection (111) and the first stop (112) in the region of the first contact surface (101), and/or that the second latching means (120) comprises a second projection (121) of the second contact surface (102) and the second stop (122), which together latch the second end of the respective spring plate (1a, 1b) between the second projection (121) and the second stop (122) in the region of the second contact surface (102).

13. The clamping and/or braking device (10) according to claim 12, **characterised in that** the first projection (111) comprises a step or ramp and/or that the second projection (121) comprises a step or ramp.

14. The clamping and/or braking device (10) according to claim 12 or 13, **characterised in that** the first projection (111) is arranged between the first annular edge (12a) and the first stop (112) on the first contact surface (101) of the respective housing part (3a, 3b) in the region of the recess (11), preferably wherein the first projection (111), or the step or ramp of the first projection, is arranged at a distance (V₂) of 2 mm to 6 mm, 3 mm to 5 mm, 3 mm to 4 mm, or about 3.2 mm from the first annular edge (12a) on the first contact surface (101) of the housing part (3a, 3b) in the region of the recess (11),
and/or,
that the second projection (121) is arranged between the second annular edge (12b) and the second stop (122) on the second contact surface (102) of the respective housing part (3a, 3b) in the region of the recess (11), preferably wherein the second projection (121), or the step or ramp of the second projection, is arranged at a distance (V₂) of 2 mm to 6 mm, 3 mm to 5 mm, 3 mm to 4 mm, or about 3.2 mm from the second annular edge (12b) on the second contact surface (102) of the housing part (3a, 3b) in the region of the recess (11).

15. The clamping and/or braking device (10) according to any one of the preceding claims, **characterised in that** the at least one pressure space comprises a first pressure space (4) which is arranged outside the spring (1) between at least one of the spring plates (1a, 1b) and the housing (3).

16. The clamping and/or braking device (10) according to claim 15, **characterised in that** the first spring plate (1a) is designed to reduce its bending by aerating the first pressure space (4) or by applying positive pressure to the first pressure space (4) in order to press, when the first end of the first spring plate (1a) is supported on the first contact surface (101) of the first housing part (3a), with the second end of the first spring plate (1a) on the second contact surface (102) of the first housing part (3a) such that a transmission of a clamping and/or braking force from the clamping surface (7) of the clamping element (8) to the object (5) to be clamped and/or braked is effected thereby and the device (10) changes from the closed state to the open state of the first housing part (3a),
and/or,
**in that** the second spring plate (1b) is designed to reduce its bending by aerating the first pressure space (4) or by applying positive pressure to the first pressure space (4) in order to press, when the first end of the second spring plate (1b) is supported on the first contact surface (101) of the second housing part (3b), with the second end of the second spring plate (1b) on the second contact surface (102) of the second housing part (3a) such that a transmission of a clamping and/or braking force from the clamping surface (7) of the clamping element (8) to the object (5) to be clamped and/or braked is effected thereby and the device (10) changes from the closed state to the open state of the first housing part (3a).

17. The clamping and/or braking device (10) according to any one of claims 15 to 16, **characterised in that** the device (10) is designed such that by aerating the first pressure space (4) or by applying positive pressure to the first pressure space (4), the first contact surface (101) and the second contact surface (102) of at least one of the two housing parts (3a, 3b) move away from one another and/or the bending of at least one of the spring plates (1a, 1b) is reduced and the device (10) changes thereby from the closed state to the open state.

18. The clamping and/or braking device (10) according to any one of the preceding claims, **characterised in that** the at least one pressure space comprises one or more second pressure spaces (2), wherein the one or more second pressure spaces (2) are arranged inside the spring (1) between each of the two spring plates (1a, 1b) and the insert plate (100),

19. The clamping and/or braking device (10) according to claim 18, wherein the device (10) is designed such that by aerating the one or more second pressure spaces (2) or by applying positive pressure to the one or more second pressure spaces (2), the first contact surface (101) and the second contact surface (102) of at least one of the two housing parts (3a, 3b) move towards one another and/or the bending of at least one of the spring plates (1a, 1b) is increased and the device (10) changes thereby from the closed state to the open state.

## Revendications

1. Dispositif de serrage et/ou de freinage (10) pour serrer et/ou freiner un objet (5) à serrer et/ou freiner, comprenant:
un boîtier (3) comprenant un premier élément de boîtier (3a) et un deuxième élément de boîtier (3b), dans lequel chacun des éléments de boîtier (3a, 3b) comprend un évidement annulaire (11) définissant une première surface d'appui (101) de l'élément de boîtier (3a, 3b) et une deuxième surface d'appui (102) de l'élément de boîtier (3a, 3b), et dans lequel les deux éléments de boîtier (3a, 3b) sont agencés l'un par rapport à l'autre et fixés l'un à l'autre de sorte que les évidements (11) des premier et deuxième éléments de boîtier (3a, 3b) forment ensemble un espace intérieur (13) à l'intérieur du boîtier (3);
un ressort (1) agencé dans l'espace intérieur (13) comprenant une première plaque de ressort annulaire (1a) et une deuxième plaque de ressort annulaire (1b), dans lequel la première plaque de ressort annulaire (1a) est serrée dans l'évidement annulaire (11) du premier élément de boîtier (3a) entre la première surface d'appui (101) et la deuxième surface d'appui (102) du premier élément de boîtier (3a), et dans lequel la deuxième plaque de ressort annulaire (1b) est serrée dans l'évidement annulaire (11) du deuxième élément de boîtier (3a) entre la première surface d'appui (101) et la deuxième surface d'appui (102) du deuxième élément de boîtier (3a);
au moins un élément de serrage (8), dans lequel chaque élément de serrage (8) présente une surface de serrage (7) qui est conçue, lorsqu'une première extrémité de l'une des plaques de ressort (1a, 1b) s'appuie sur la première surface d'appui (101) de l'un des éléments de boîtier (3a, 3b) et qu'une deuxième extrémité de l'une des plaques de ressort (1a, 1b) appuie sur la deuxième surface d'appui (102) de l'un des éléments de boîtier (3a, 3b), pour transmettre une force de serrage et/ou de freinage à l'objet (5) à serrer et/ou à freiner;
dans lequel les plaques de ressort (1a, 1b) sont agencées à l'intérieur de l'espace intérieur (13) de sorte qu'au moins un espace de pression (2, 4) est formé dans l'espace intérieur (13), lequel est au moins partiellement délimité par les plaques de ressort (1a, 1b), dans lequel l'espace de pression (2, 4) peut être aéré ou désaéré et peut être soumis à une surpression d'un fluide sous pression pouvant être amené au boîtier (3), dans lequel les plaques de ressort (1a, 1b) sont agencées par rapport à l'au moins un espace de pression (2, 4) de sorte qu'une flexion d'au moins l'une des plaques de ressort (1a, 1b) peut être modifiée en aérant ou en désaérant l'espace de pression (2, 4) ou en soumettant l'espace de pression (2, 4) à une surpression, et ainsi le dispositif de serrage et/ou de freinage (10) change entre un état ouvert, dans lequel l'au moins une surface de serrage (7) est espacée de l'objet (5), et un état fermé, dans lequel une ou plusieurs de l'au moins une surface de serrage (7) transmettent une force de serrage et/ou de freinage à l'objet (5);
**caractérisé en ce que**
le dispositif de serrage et/ou de freinage (10) comprend en outre au moins une plaque d'insertion (100) qui est agencée entre la première plaque de ressort (1a) et la deuxième plaque de ressort (1b) dans l'espace intérieur (13).

2. Dispositif de serrage et/ou de freinage (10) selon la revendication 1, **caractérisé en ce que** la plaque d'insertion (100) s'étend dans chacun des éléments de boîtier (3a, 3b) entre la première surface d'appui (101) respective et la deuxième surface d'appui (102) respective.

3. Dispositif de serrage et/ou de freinage (10) selon la revendication 1 ou 2, **caractérisé en ce que** la plaque d'insertion est annulaire.

4. Dispositif de serrage et/ou de freinage (10) selon l'une quelconque des revendications précédentes, **caractérisé en ce que** la plaque d'insertion (100) est rigide.

5. Dispositif de serrage et/ou de freinage (10) selon l'une quelconque des revendications précédentes, **caractérisé en ce que** l'élément de serrage (8) présente la surface de serrage (7) sur une première surface latérale et la deuxième surface d'appui (102) de l'un des éléments de boîtier (3a, 3b) sur une deuxième surface latérale qui est de préférence opposée et/ou opposée à la première surface latérale.

6. Dispositif de serrage et/ou de freinage (10) selon l'une quelconque des revendications précédentes, **caractérisé en ce que** l'élément de serrage (8) est élastique de telle sorte que l'élément de serrage (8) forme un bras de levier (8a) qui est conçu pour se déformer élastiquement en appuyant au moins l'une des plaques de ressort (1a, 1b) sur la deuxième surface d'appui (102) d'au moins l'un des éléments de boîtier (3a, 3b) et pour ainsi tourner autour d'un point de rotation (D) de telle sorte que la surface de serrage (7) de l'élément de serrage (8) transmette la force de serrage et/ou de freinage à l'objet (5) à serrer et/ou à freiner.

7. Dispositif de serrage et/ou de freinage (10) selon la revendication 6, **caractérisé en ce que** le bras de levier (8a) est conçu de telle sorte que lors de la rotation du bras de levier (8a) autour du point de rotation (D), une extrémité (8b) du bras de levier (8a) est déplacée d'une course radiale (H2) plus près de l'objet (5).

8. Dispositif de serrage et/ou de freinage (10) selon la revendication 7, **caractérisé en ce que** la longueur (L₂) du bras de levier (8a) du point de rotation (D) à l'extrémité (8b) du bras de levier (8a) est choisie de telle sorte que la course radiale (H₂) est d'au moins 0,13 mm, de préférence d'au moins 0,15 mm, de manière particulièrement préférée d'au moins 0,17 mm.

9. Dispositif de serrage et/ou de freinage (10) selon la revendication 7 ou 8, **caractérisé en ce que** la longueur (L₂) du bras de levier (8a) du point de rotation (D) à l'extrémité (8b) du bras de levier (8a) est de 4 mm à 8 mm, de 5 mm à 7 mm, de 6 mm à 7 mm ou d'environ 6,6 mm.

10. Dispositif de serrage et/ou de freinage (10) selon l'une quelconque des revendications précédentes, **caractérisé en ce que** l'évidement annulaire (11) de chaque élément de boîtier (3a, 3b) définit une ouverture annulaire (12) dans l'élément de boîtier (3a, 3b), dans lequel l'ouverture annulaire (12) est formée entre un premier bord annulaire (12a) de l'élément de boîtier (3a, 3b) et un deuxième bord annulaire (12b) de l'élément de boîtier (3a, 3b),
dans lequel la première surface d'appui (101) de chaque élément de boîtier (3a, 3b) est limitée par le premier bord annulaire (12a) de l'élément de boîtier (3a, 3b) et une première butée (112) de l'élément de boîtier (3a, 3b) de telle sorte que lors de l'introduction de l'une des plaques de ressort (1a, 1b) de l'extérieur devant le premier bord annulaire (12a) dans l'évidement (11) de l'élément de boîtier (3a, 3b), la première butée (112) forme un obstacle à une introduction plus profonde de la plaque de ressort (1a, 1b) dans l'évidement (11), de préférence dans lequel la distance (A₂) entre la première butée (112) et le premier bord annulaire (12a) est de 3 mm à 6 mm, de 4 mm à 5 mm ou d'environ 4,7 mm,
et/ou
dans lequel la deuxième surface d'appui (101) de chaque élément de boîtier (3a, 3b) est limitée par le deuxième bord annulaire (12b) de l'élément de boîtier (3a, 3b) et une deuxième butée (122) de l'élément de boîtier (3a, 3b) de telle sorte que lors de l'introduction de l'une des plaques de ressort (1a, 1b) de l'extérieur devant le deuxième bord annulaire (12b) dans l'évidement (11) de l'élément de boîtier (3a, 3b), la deuxième butée (122) forme un obstacle à une introduction plus profonde de la plaque de ressort (1a, 1b) dans l'évidement (11), de préférence dans lequel la distance (A₂) entre la deuxième butée (122) et le deuxième bord annulaire (12b) est de 3 mm à 6 mm, de 4 mm à 5 mm ou d'environ 4,7 mm.

11. Dispositif de serrage et/ou de freinage (10) selon l'une quelconque des revendications précédentes, **caractérisé en ce que** chacun des éléments de boîtier (3a, 3b) comprend un premier moyen d'encliquetage (110) et un deuxième moyen d'encliquetage (120), dans lequel la plaque de ressort respective (1a, 1b) est serrée dans l'évidement (11) de l'élément de boîtier (3a, 3b) entre la première surface d'appui (101) et la deuxième surface d'appui (102) de l'élément de boîtier de telle sorte que le premier moyen d'encliquetage (110) encliquete la première extrémité de la plaque de ressort respective (1a, 1b) sur la première surface d'appui (101) et le deuxième moyen d'encliquetage (120) encliquete la deuxième extrémité de la plaque de ressort respective (1a, 1b) sur la deuxième surface d'appui (102).

12. Dispositif de serrage et/ou de freinage (10) selon la revendication 11, **caractérisé en ce que** le premier moyen d'encliquetage (110) comprend une première saillie (111) de la première surface d'appui (101) et la première butée (112), qui encliquetent ensemble la première extrémité de la plaque de ressort respective (1a, 1b) entre la première saillie (111) et la première butée (112) dans la région de la première surface d'appui (101), et/ou **en ce que** le deuxième moyen d'encliquetage (120) comprend une deuxième saillie (121) de la deuxième surface d'appui (102) et la deuxième butée (122), qui encliquetent ensemble la deuxième extrémité de la plaque de ressort respective (1a, 1b) entre la deuxième saillie (121) et la deuxième butée (122) dans la région de la deuxième surface d'appui (102).

13. Dispositif de serrage et/ou de freinage (10) selon la revendication 12, **caractérisé en ce que** la première saillie (111) comprend un gradin ou une rampe et/ou **en ce que** la deuxième saillie (121) comprend un gradin ou une rampe.

14. Dispositif de serrage et/ou de freinage (10) selon la revendication 12 ou 13, **caractérisé en ce que** la première saillie (111) est agencée entre le premier bord annulaire (12a) et la première butée (112) sur la première surface d'appui (101) de l'élément de boîtier respectif (3a, 3b) dans la région de l'évidement (11), de préférence dans lequel la première saillie (111), ou le gradin ou la rampe de la première saillie, est agencé à une distance (V₂) de 2 mm à 6 mm, de 3 mm à 5 mm, de 3 mm à 4 mm, ou d'environ 3,2 mm du premier bord annulaire (12a) sur la première surface d'appui (101) de l'élément de boîtier (3a, 3b) dans la région de l'évidement (11),
et/ou
**en ce que** la deuxième saillie (121) est agencée entre le deuxième bord annulaire (12b) et la deuxième butée (122) sur la deuxième surface d'appui (102) de l'élément de boîtier respectif (3a, 3b) dans la région de l'évidement (11), de préférence dans lequel la deuxième saillie (121), ou le gradin ou la rampe de la deuxième saillie, est agencé à une distance (V₂) de 2 mm à 6 mm, de 3 mm à 5 mm, de 3 mm à 4 mm, ou d'environ 3,2 mm du deuxième bord annulaire (12b) sur la deuxième surface d'appui (102) de l'élément de boîtier (3a, 3b) dans la région de l'évidement (11).

15. Dispositif de serrage et/ou de freinage (10) selon l'une quelconque des revendications précédentes, **caractérisé en ce que** l'au moins un espace de pression comprend un premier espace de pression (4) qui est agencé à l'extérieur du ressort (1) entre au moins l'une des plaques de ressort (1a, 1b) et le boîtier (3).

16. Dispositif de serrage et/ou de freinage (10) selon la revendication 15, **caractérisé en ce que** la première plaque de ressort (1a) est conçue, par l'aération du premier espace de pression (4) ou par l'application d'une surpression au premier espace de pression (4), pour réduire sa flexion afin, lors de l'appui de la première extrémité de la première plaque de ressort (1a) sur la première surface d'appui (101) de l'élément de boîtier (3a), d'appuyer avec la deuxième extrémité de la première plaque de ressort (1a) sur la deuxième surface d'appui (102) de l'élément de boîtier (3a) de telle sorte qu'une transmission d'une force de serrage et/ou de freinage de la surface de serrage (7) de l'élément de serrage (8) de l'élément de boîtier (3a) à l'objet (5) à serrer et/ou à freiner soit ainsi effectuée et que le dispositif (10) passe de l'état ouvert à l'état fermé,
et/ou
**en ce que** la deuxième plaque de ressort (1b) est conçue, par l'aération du premier espace de pression (4) ou par l'application d'une surpression au premier espace de pression (4), pour réduire sa flexion afin, lors de l'appui de la première extrémité de la deuxième plaque de ressort (1b) sur la première surface d'appui (101) de l'élément de boîtier (3b), d'appuyer avec la deuxième extrémité de la deuxième plaque de ressort (1b) sur la deuxième surface d'appui (102) de l'élément de boîtier (3a) de telle sorte qu'une transmission d'une force de serrage et/ou de freinage de la surface de serrage (7) de l'élément de serrage (8) de l'élément de boîtier (3a) à l'objet (5) à serrer et/ou à freiner soit ainsi effectuée et que le dispositif (10) passe de l'état ouvert à l'état fermé.

17. Dispositif de serrage et/ou de freinage (10) selon l'une quelconque des revendications 15 à 16, **caractérisé en ce que** le dispositif (10) est conçu de telle sorte que, par l'aération du premier espace de pression (4) ou par l'application d'une surpression au premier espace de pression (4), la première surface d'appui (101) et la deuxième surface d'appui (102) d'au moins l'un des deux éléments de boîtier (3a, 3b) s'éloignent l'une de l'autre et/ou la flexion d'au moins l'une des plaques de ressort (1a, 1b) diminue, et le dispositif (10) passe ainsi de l'état ouvert à l'état fermé.

18. Dispositif de serrage et/ou de freinage (10) selon l'une quelconque des revendications précédentes, **caractérisé en ce que** l'au moins un espace de pression comprend un ou plusieurs deuxièmes espaces de pression (2), les un ou plusieurs deuxièmes espaces de pression (2) étant agencés à l'intérieur du ressort (1) entre chacun des deux plaques de ressort (1a, 1b) et la plaque d'insertion (100),

19. Dispositif de serrage et/ou de freinage (10) selon la revendication 18, dans lequel le dispositif (10) est conçu de telle sorte que, par l'aération des un ou plusieurs deuxièmes espaces de pression (2) ou par l'application d'une surpression aux un ou plusieurs deuxièmes espaces de pression (2), la première surface d'appui (101) et la deuxième surface d'appui (102) d'au moins l'un des deux éléments de boîtier (3a, 3b) se rapprochent l'une de l'autre et/ou la flexion d'au moins l'une des plaques de ressort (1a, 1b) augmente, et le dispositif (10) passe ainsi de l'état fermé à l'état ouvert.
